# FASCICULE DE BREVET EUROPEEN

(11) **EP 1 115 802 B1**
(45) Date de publication et mention de la délivrance du brevet: **29.03.2006**
(21) Numéro de dépôt: 99929504.1
(22) Date de dépôt: 19.07.1999
(51) Int. Cl.: C09D 183/08

(54) **UTILISATION D'UNE COMPOSITION SILICONE FONCTIONNALISEE POUR LA REALISATION DE REVETEMENT ET/OU D'IMPREGNATION HYDROPHOBE ET/OU OLEOPHOBE, A FAIBLE ENERGIE DE SURFACE**
VERWENDUNG EINER FUNKTIONALISIERTEN SILICONZUSAMMENSETZUNG ZUR HERSTELLUNG VON WASSER- UND/ODER ÖLABWEISENDEN BESCHICHTUNGEN UND /ODER IMPRÄGNIERUNGEN MIT EINER NIEDRIGEN OBERFLÄCHENENERGIE
USE OF A FUNCTIONALISED SILICONE COMPOSITION FOR PRODUCING A HYDROPHOBIC AND/OR OIL-REPELLENT COATING AND/OR IMPREGNATION WITH LOW SURFACE ENERGY

(30) Priorité: 21.07.1998 FR 9809438
(43) Date de publication de la demande: 18.07.2001
(73) Titulaire: RHODIA CHIMIE, 92512 Boulogne-Billancourt (FR)
(72) Inventeur: GUICHARD, Gérald, F-69700 Givors (FR); MIGNANI, Gérard, F-69008 Lyon (FR); OLIER, Philippe, F-69007 Lyon (FR)
(74) Mandataire: Fleurance, Raphael
(86) Numéro de dépôt international: PCT/FR1999/001761
(87) Numéro de publication internationale: WO 2000/005315

(56) Documents cités:
- WO-A-94/28053
- WO-A-96/06895
- DE-A- 4 240 274
- FR-A- 2 737 214

## Description

### DOMAINE TECHNIQUE :

Le domaine de l'invention est celui des formulations de traitement de support en vue de leur conférer une résistance aux substances aqueuses et grasses. Plus particulièrement, l'invention concerne des compositions silicones contenant des radicaux perhalogénés - de préférence perfluorés - utilisables notamment pour la réalisation de revêtements et/ou d'imprégnations hydrophobes et/ou oléophobes, de supports divers.

Plus particulièrement encore, l'invention concerne des compositions silicones susceptibles d'être employées comme apprêts fluorés, dans le domaine du textile pour apporter aux tissus traités une imperméabilisation, et des propriétés anti-tâches et/ou antisalissures, combinées avec une facilité de lavage.
De telles propriétés sont également intéressantes pour d'autres domaines d'application que le domaine textile. On peut citer, par exemple, le domaine du bâtiment dans lequel sont mis en oeuvre des revêtements, peintures, enduits ou autres vernis hydro et oléofuges et offrant une résistance des surfaces non adhésives vis-à-vis de la glace, des salissures biologiques du type de celles se fixant sur les coques de bâteaux (« fouling »), des graffitis ou vis-à-vis d'autres contaminants indésirables.

### ART ANTERIEUR :

Les huiles silicones greffées par des motifs fluorés, peuvent aussi être utilisées comme lubrifiant, comme agent anti-adhérent spécifique vis-à-vis de certains adhésifs (silicones à fort pouvoir adhésif), comme agent anti-gras, ou bien encore comme anti-mousse. Elles peuvent être également formulées avec différents épaississants pour former des mastics ou tous autres matériaux d'étanchéification et/ou de jointage.

La présente invention vise l'utilisation de compositions silicones fonctionnalisées comprenant des polyorganosiloxanes linéaires ou cycliques perhalogénés - de préférence perfluorés - présentant au moins un atome de silicium substitué par au moins un radical perfluoré Rf, pour la réalisation de revêtements et/ou imprégnations hydrophobes et/ou oléophobes à basse énergie de surface (par exemple revêtement anti-salissures sur supports textiles).

L'invention comprend également une sélection de compositions silicones à fonctions perfluorées données et à autres fonctions, notamment d'accrochage, particulières.

La présente invention concerne aussi un procédé de réalisation de revêtement et/ou d'imprégnation hydrophobe et/ou oléophobe, mettant en oeuvre ladite composition.

L'invention vise enfin des précurseurs de revêtements, enduits, peintures ou autres vernis comprenant cette composition.

Le rôle des halogènes et en particulier du fluor et de la liaison carbone / fluor dans l'apport de propriétés spécifiques à des systèmes polymères organiques, est une notion bien connue en chimie des polymères. On sait notamment que la fluoration, et plus précisément l'introduction de motifs perfluorés dans des polymères, amène une diminution des énergies de surface, une amélioration de la stabilité thermique et chimique de même que des propriétés d'hydrophobie, d'organophobie et d'oléophobie. Il est ainsi connu que pour résister aux substances aqueuses et grasses, un revêtement doit comporter une densité importante de groupes terminaux perfluorés Rf en surface. Depuis les années 1970, ce type de fonctionnalisation par perfluoration est appliqué à des polymères silicones, en particulier du type polyorganosiloxanes (POS) linéaires ou cycliques ; de préférence linéaires.
Pour plus de détails sur ces silicones fluorés, on peut se référer à l'Article de OGDEN R. PIERCE intitulé "Fluorosilicones - 1970 - John Wiley & Sons Inc. pages 1 à 15.

Une première stratégie de synthèse industrielle connue de silicones à motifs perfluorés, consiste essentiellement à "hydrosilyler" un dihalogénohydrogénoorganosilane, tel que le MeHSiCl₂ (Me = méthyle), par un composé insaturé porteur d'un motif perfluoré et de formule générale : CH₂=CH―Rf (**Rf** = motif perfluoré). L'addition du silane sur cette oléfine conduit à un dihalogénoorganosilane perfluoré, qui peut être hydrolysé de façon à produire un silicone fonctionnalisé, lequel peut être, par exemple, un tétramère cyclique. Il est possible de soumettre ce dernier à une redistribution pour obtenir un polyorganosiloxane (POS) linéaire perfluoré. Les réactions d'hydrosilylation qui interviennent dans ce genre de synthèse et qui mettent en oeuvre diverses combinaisons d'hybrides silicones et d'oléfines perfluorées, sont connues comme étant catalysées par des composés métalliques sélectionnés et en particulier certains métaux du groupe VIII tel que le platine. Des complexes Pt/Sn ont ainsi été employés à titre de catalyseur d'hydrosilylation - Cf. brevet **US N° 4 089 882** (SHINETSU). Cette stratégie de synthèse apparaît comme étant relativement complexe et donc coûteuse.

Dans un souci de simplification industrielle, il a été proposé une seconde stratégie de synthèse fondée sur l'hydrosilylation directe d'un silicone à motif SiH à l'aide d'oléfine α- fluorée e.g. du type CH₂=CH―Rf, ce motif perfluoré **Rf** étant rattaché directement au CH oléfinique par un atome de carbone porteur d'au moins un atome de fluor. Là encore divers catalyseurs métalliques du groupe VIII, en particulier à base de platine, sont utilisés dans le cadre de cette réaction d'hydrosilylation. Il s'est avéré cependant que ces catalyseurs ne permettaient pas d'atteindre des rendements très élévés. En particulier, les catalyseurs d'hydrosilylation industrielle classiques à base de platine (par exemple du type KARSTEDT) ne sont pas très efficaces. En outre, il a pu être constaté que d'importantes quantités de sous-produit sont générées et ce, bien évidemment, au détriment de la perfluoration des silicones.

Dans le brevet **US N° 5 233 071,** ce sont ces rotules qui sont mises en oeuvre. Elles proviennent de l'hydrosilylation d'α-oléfines. Mais pour pallier aux carences des catalyseurs d'hydrosilylation utilisés antérieurement, le procédé décrit dans ce brevet fait appel à des complexes organométalliques à base de cobalt [(Co₂CO₈, Co₂ CO₆) (PR₃)₃ avec R = alkyle, aryle]. Une telle proposition technique est apparue comme n'étant pas satisfaisante, car les durées de réaction obtenues sont de l'ordre de quelques jours et il est indispensable d'utiliser une quantité importante de catalyseur (1-2 %), ce qui est particulièrement pénalisant pour l'économie du procédé.

Un inconvénient non négligeable de ces complexes à base de cobalt est qu'ils catalysent d'autres réactions que l'hydrosilylation. En particulier, ils peuvent participer à des processus de polymérisation par rupture de cycles époxy. Ce manque de spécificité est particulièrement gênant. En outre, ces catalyseurs ne sont pas industriels.

Le brevet **US N° 5 348 769** divulgue des polyorganosiloxanes linéaires ou cycliques, comprenant des motifs siloxyles **D** substitués par un premier motif fonctionnel perfluoré de formule -R³ Z**Rf** ainsi que d'autres motifs siloxyles **D**, porteurs d'un deuxième type de motif fonctionnel du type étherhydroxyle ou alkylhydroxyle. La rotule ou le pont reliant Si à **Rf** du premier motif fonctionnel perfluoré, est constitué notamment par : (CH₂)ₓ Z avec x = 2,3 ou 4 et Z = NHCO, NHSO₂, O₂C, O₃S, OCH₂CH₂, NHCH₂CH₂ ou CH₂CHOHCH₂. Le catalyseur mis en oeuvre est, de préférence, l'acide chloroplatinique.

Hormis ces rotules dont les précurseurs sont des α-oléfines perfluoroalkylées de formule CH₂ = CH - **Rf**, la littérature technique antérieure décrit également des ponts dont les précurseurs oléfiniques sont du type CH₂=CH-Ⓛ-Rf ; la liaison chimique entre Ⓛ et **Rf** étant une liaison ester. Cette dernière résulte de la réaction d'une fonction carboxylique avec un alcool perhalogéné, de préférence perfluoré. Et généralement, ladite fonction carboxylique est le produit de l'hydrolyse d'un anhydride d'acide.

C'est ainsi que la demande de brevet PCT **WO 94/12561** diwlgue des POS greffés par des motifs fluorés uniquement en position α et ω aux extrémités des chaînes silicones. Ces POS α-ω alkylesterperfluorés ne présentent pas des propriétés optimales en ce qui concerne l'abaissement de tension de surface ainsi que l'oléophobie et l'hydrophobie.

La demande de brevet européen **N° 0 640 644** décrit quant à elle, des dérivés silicones perfluorés (**Rf**), utilisables dans des formulations cosmétiques. Ces dérivés silicones perfluorés sont caractérisés par des motifs siloxyles D, porteurs de greffons perfluorés de trois types différents, à savoir : 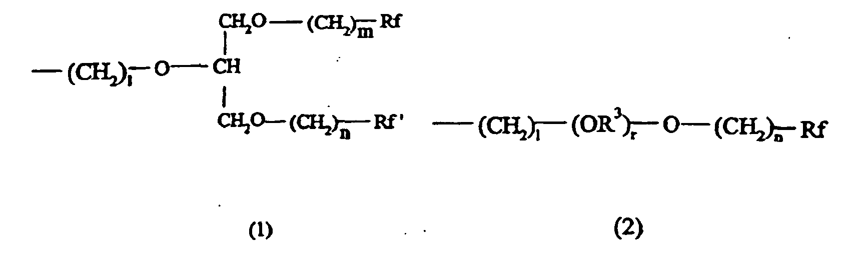 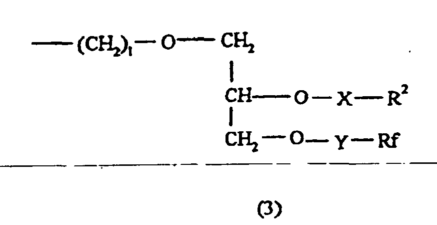 avec R², R³ = alkyle, e.g. CH₃ ;
2 ≤ 1 ≤ 16, e.g. 1 = 3 ; 1 ≤ m,n ≤ 6 ; ≤ p ≤ 200 ; 0 ≤ r ≤ 50;
X, Y = simple liaison, -CO-, alkylène en C₁-C₆ ;
Ces greffons perfluorés (1) à (3) ont en commun la présence de liaisons étheroxydes au sein de la rotule reliant le radical perfluoré **Rf** au silicium.

Pour pallier l'absence de POS perfluorés chimiquement stables et pouvant être obtenus de manière simple et économique, la demanderesse a déjà proposé de nouveaux POS linéaires ou cycliques perfluorés répondant à ces spécifications et comprenant des greffons perfluorés **Gf** de formule : CₘH₂ₘ-Rf, dans laquelle m ≥ 2 et **Rf** = restes perfluorés ; et éventuellement un ou plusieurs autres greffons **Gf** perfluorés ou non avec une première condition selon laquelle au moins 60 % des greffons **Gf** sont perfluorés et une deuxième condition selon laquelle dans le cas où m = 2, il est alors prévu au moins un autre greffon **Gf** de nature différente de celle définie dans la formule ci-dessus.
Ces POS peuvent répondre, e.g. à la formule suivante : 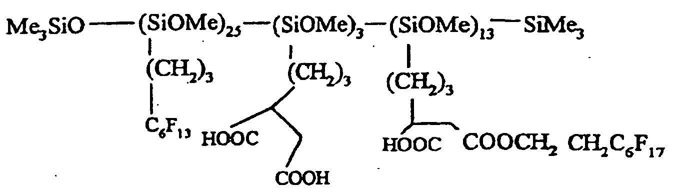 Ces POS sont utilisables dans la formulation d'antimousses de lubrifiants, d'agents antiadhérents, d'agents abaisseurs de tension de surface d'agents antisalissures, d'agents oléophobes et/ou hydrophobes ou de matières premières pour la réalisation d'élastomères ou de films résistant aux agressions chimiques et aux solvants. Ces nouveaux POS perfluorés ainsi que leur obtention et leur application sont décrits dans la demande de brevet français **N° 95 09 269**.

La demande de brevet français N° 95 09 268 (Pub n°2 737 214) est une demande soeur de la FR 95 09 269. Cette demande N° 95 09 268 divulgue des POS perfluorés polyfonctionnels comprenant, d'une part, des greffons latéraux fluorés (Gf) résultant de l'hydrosilylation d'oléfines perfluorées par des SiH et présentant des rotules alkyles et/ou alkylesters, à l'exclusion des éthers, et d'autre part, d'autres motifs fonctionnels non perfluorés (E) qui peuvent être notamment du type propylmalonyle sous forme COOR ou anhydride, ou du type amine.
Ces POS peuvent, e.g. être ceux de formule suivante : 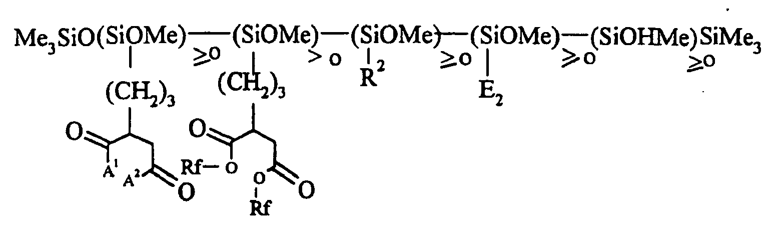 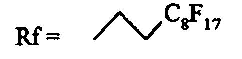 E₂ = amine
A¹ = A² = OH ou A¹, A² = - O -
R² = alkyle en C₁-C₁₂.
Ces POS ont les mêmes applications que ceux selon le **FR 95 09 629**, dont notamment l'antisalissure textile.

### BREF EXPOSE DE L'INVENTION :

L'un des objectifs essentiels de la présente invention est de sélectionner des compositions silicones perfluorées et dotées également d'autres fonctionnalités tout spécialement adaptées à la réalisation de revêtements hydrophobes et/ou oléophobes, à basse énergie de surface (par exemple des revêtements antisalissures sur supports textiles).

Un autre objectif essentiel de la présente invention est de perfectionner les (co-)polymères silicones perfluorés selon l'art antérieur et en particulier selon les **FR 95 09 269** et **FR 95 09 268 :**
- en leur procurant de meilleures propriétés d'accrochage aux substrats, pour ce qui concerne les applications revêtements et/ou imprégnations,
- et en améliorant leurs caractères hydrophobe et oléophobe ainsi que leur résistance au lavage, à l'usure et à l'abrasion, bref en augmentant leur durée de vie.
Il importe en effet que les systèmes silicones perfluorés ne soient pas sensibles aux agressions extérieures (solubilisation / extraction due aux lavages ou à l'action d'abrasifs), de manière à conserver leurs propriétés recherchées d'abaissement de la tension superficielle à l'origine de leurs fonctions d'imperméabilité, anti-tâches et anti-salissures. En effet, les agressions extérieures sus-évoquées ont pour répercussion directe l'élimination des groupements perfluorés en surface. Or, on a vu ci-dessus que cette localisation superficielle desdits groupements **Rf** est essentielle à leur efficacité.

S'étant fixés ces objectifs, parmi d'autres, les inventeurs ont eu le mérite de mettre en évidence après de longues et laborieuses recherches et expérimentations, et de manière tout à fait surprenante et inattendue :
- d'une part que l'on pouvait, avantageusement, utiliser certaines compositions silicones perfluorées et fonctionnalisées spécifiques pour réaliser des revêtements hydrophobes et/ou oléophobes, à basse énergie de surface (par exemple des revêtements antisalissures sur supports textiles).
- et d'autre part que l'on pouvait aller dans le sens du perfectionnement en proposant un système silicone comprenant des POS porteurs :
   - de première part, de greffons (**Gf**) perhalogénés, de préférence perfluorés, judicieusement sélectionnés parmi les esters perfluorés de diacides carboxyliques susceptibles de former des anhydrides (e.g. acide maléique) ; ces greffons **Gf** étant qualifiés de greffons Rf bifides ;
   - de deuxième part, de fonctions d'accrochage de type HALS, époxy ou polyéther ;
   - et éventuellement de troisième part, de groupements alkyles présentant plus de 12 atomes de carbone en substitution d'une partie des greffons fluorés **Gf**.

Il s'ensuit que la présente invention concerne tout d'abord l'utilisation selon la revendication 1.

A titre de légende pour toutes les formules données dans le présent exposé, il convient d'indiquer que les valences libres représentées en gras 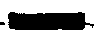 , sont celles qui sont rattachées directement ou indirectement au silicium de la molécule considérée.

Par basse énergie de surface, on entend conformément à l'invention des valeurs de γ, total ≤ 15 mJ /m².

En choisissant d'utiliser des POS substitués par des greffons perfluorés **Gf** de formule I de type bifide **Rf** ou **bisRf,** par des fonctions **f**_{**a**} d'accrochage amine (de préférence du type pipéridinyle encombré e.g. : HALS), époxy, polyéther ou carboxylique, et éventuellement par des alkyles longs en lieu et place des **Gf,** les inventeurs apportent une solution tout à fait satisfaisante au problème de l'accrochage des revêtements fluorés hydrophobes et oléophobes sur les substrats et de l'augmentation de la résistance aux substances aqueuses et grasses. Cela permet également d'augmenter la pérénité de l'efficacité du fluor superficiel.
De plus, sans vouloir être lié par la théorie, il semblerait que la structure bifide des greffons **Gf** sélectionnés selon l'invention, concourt à la mise en place d'une organisation anisotropique, qui promeut l'action hydrophobe et oléophobe des motifs perfluorés.

Au sens de l'invention, les fonctions **f**_{**a4**} du type carboxylique sont celles correspondant à -COOR avec R = radical hydrocarboné ou à COO⁻, X⁺ avec X⁺ = cation métallique alcalin ou ammonium.

### EXPOSE DETAILLE :

S'agissant toujours des greffons perfluorés **Gf,** il est à noter que selon l'invention, les restes monovalents **Rf**_{**1**} et **Rf**_{**2**} dans la formule **I** correspondent de préférence à -CₚF₂ₚ-CF₃ ; avec p compris entre 3 et 20 ; de préférence entre 5 et 20 et, plus préférentiellement encore entre 7 et 10.
En pratique, on peut aussi mettre en oeuvre, par exemple, des mélanges de **Rf** dont les indices p sont égaux à 7, 8 ou 9.

Suivant une variante, le POS **A** est porteur, par molécule :
→ d'un ou plusieurs Greffons **Gfh** perfluorés identiques ou différents entre eux et de formule **(I.1)** : 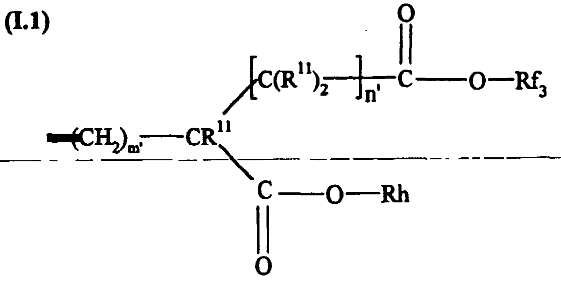 dans laquelle :
   - R¹¹, Rf₃, m', n' répondent aux mêmes définitions que celles données supra pour R¹, Rf₁, m, n ;
   - Rh est un radical alkyle linéaire ou ramifié, de préférence linéaire en C₆-C₄₀ et plus préférentiellement en C₆-C₂₀.

En ce qui concerne les radicaux fonctionnels d'accrochage **F**_{**a**}**,** des POS à greffons perfluorés **Gf** voire **Gfh,** utilisés conformément à l'invention, ce sont des radicaux hydrocarbonés identiques ou différents entre eux, qui peuvent contenir une ou plusieurs fonctions **f**_{**a1-4**} Hals, époxy, éther ou carboxy.
**F**_{**a**} peut, par exemple, être constitué d'une fonction **f**_{**a1-4**} et d'une rotule qui relie **f**_{**a1-4**} à un silicium de la chaîne siloxanique. Les rotules peuvent être des alkylènes, tels que des éthylènes, propylènes, butylènes.
Ainsi, la fonction **f**_{**a1**} = amine, de préférence pipéridinyle encombré du type HALS, peut former un radical fonctionnel **F**_{**a**} en association avec une rotule propylène divalente, de même pour **f**_{**a2**} = époxy, **f**_{**a3**} polyéther ou **f**_{**a4**} carboxy.

S'agissant de ces fonctions **f**_{**a4**} du type carboxylique, on peut envisager, à titre de variante de l'invention, qu'elles soient portées, dans une molécule, par des radicaux fonctionnels particuliers **f**_{**a4**} répondant à la formule **(IV)** suivante : 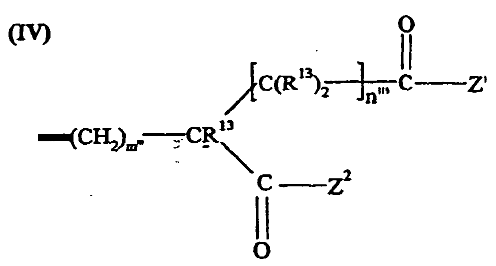 dans laquelle :
- R¹³, m''', n''' répondent aux mêmes définitions que celles données supra en légende de la formule (**I.1**) respectivement pour R¹¹, m' et n ' ;
- Z¹, Z² correspondent à -OH ou forment ensemble un pont -O-.

Ces radicaux fonctionnels d'accrochage **Fa** contribuent à la permanence des propriétés d'hydrophobie et d'oléophobie. Elles améliorent notamment la résistance au lavage.
Les interactions entre les supports (e.g. textiles) et **Fa**, qui sont à l'origine de tels résultats, peuvent le cas échéant être favorisées par un catalyseur.

Selon une modalité avantageuse, les POS **A** retenus dans l'utilisation objet de l'invention, ne comportent qu'un seul type de fonction **f**_{a1 ou 2 ou 3 ou 4}. Bien que non exclusive d'un assortiment de différentes **f**_{**a**} sur un même POS **A**, cette variante mono- **f**_{**a**} est préférée pour des raisons de simplification industrielle.

S'agissant des alkyles longs **G**_{**alk**} susceptibles de former des groupements latéraux pendants pour le POS **A** mis en oeuvre dans l'utilisation selon l'invention, il est apparu intéressant de les choisir parmi les esters d'alkylmalonate ou analogues.
Il s'ensuit que le POS **A** est, avantageusement, porteur, par molécule, d'un ou plusieurs groupement **G**ₐₗₖ identiques ou différents entre eux et de formule (**V**) : 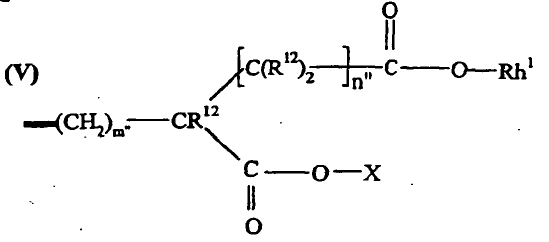 dans laquelle :
- R¹², m", n" et Rh¹, répondent aux mêmes définitions que celles données ci-dessus pour R¹¹, m', n' et Rh,
- X correspond à un radical Rh² répondant à la même définition que Rh¹ ou à l'hydrogène ou bien encore à un radical hydrocarboné différent de Rh¹ et de Rh².
Les greffons **G**_{**alk**} de formule **V**, dans lesquels Rh¹ et X sont tous deux des alkyles longs (e.g. en C₁₂-C₂₀) sont particulièrement préférés.

De préférence, le POS **A** est linéaire et comprend, outre les motifs siloxyles substitués par **Gf, F**_{**a**} et **G**_{**alk**} des motifs siloxyles D de type Si-H et/ou de type -(R²)₂SiO-.
Ainsi, dans le cas où l'application finale visée est le revêtement antisalissure pour substrats (e.g. textiles), il est souhaitable qu'existent des motifs siloxyles D libres. Selon une variante, les motifs siloxyles M terminaux des POS A linéaires, peuvent être substitués par au moins un groupement choisi parmi : **Gf, F**_{**a**}**, G**_{**alk**}.

Les POS préférés parmi lesquels le POS A est susceptible d'être sélectionné sont, en pratique, les POS statistiques linéaires, pouvant éventuellement présenter jusqu'à 50 % en poids de ramifications (motifs autres que des motifs siloxyles D) des polymères cycliques ou des polymères tridimensionnels (résines comportant des motifs siloxyles T et/ou Q). (polyméthylsiloxanes - polyméthylhydrogénosiloxanes).

Ainsi, dans un mode préféré de réalisation de l'invention, la composition comprend, un ou plusieurs POS **A** répondant à la formule (**VI**) suivante : 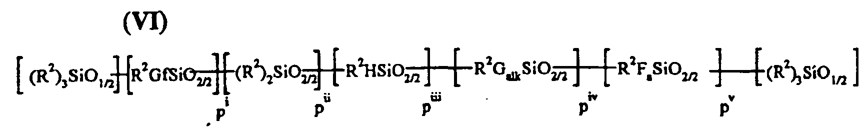 avec
□ **Gf, F**_{**a**} représentant indépendamment et respectivement des greffons perfluorés et des radicaux porteurs de fonctions **F**_{**a**}**,** tels que définis supra ;
□ R² identiques ou différents entre eux = méthyle, propyle ou butyle ;
□ Gₐₗₖ identiques ou différents entre eux = alkyle linéaire ou ramifié, de préférence en C₆-C₄₀, et plus préférentiellement en C₆₋C₂₀ ;
□ 0 < pⁱ, de préférence 1 ≤ pⁱ ≤ 100 ;
□ 0 ≤ pⁱⁱ, de préférence 0 ≤ pⁱⁱ ≤ 500 ;
□ 0 ≤ pⁱⁱⁱ, de préférence 0 ≤ pⁱⁱⁱ ≤ 10 ;
□ 0 ≤ p^{iv}, de préférence 0 ≤ p^{iv} ≤ 100 ;
□ 0 < p^{v}, de préférence 1 ≤ p^{v} ≤ 100 ;
□ Σp^{i à v} + 2 = 5 à 600, de préférence 10 à 400.

En pratique, on peut avoir :
□ 1 ≤ pⁱ ≤ 50 ;
□ 50 ≤ pⁱⁱ ≤ 300 ;
□ 0 ≤ pⁱⁱⁱ ≤ 5 ;
□ 0 ≤ p^{iv} ≤ 50 ;
□ 1 ≤ p^{v} ≤ 50 ;
□ Σp^{i à v} + 2 = 5 à 300.

Suivant une variante avantageuse, le POS A utilisé selon l'invention, comprend outre les motifs siloxyles M et D des motifs siloxyles T et éventuellement Q

Le POS **A** de la composition selon l'invention est également original et avantageux, du fait de ses caractéristiques d'obtention. Il est, de préférence, obtenu à partir de POS choisis parmi les polyalkylhydrogénosiloxanes, les motifs SiH de ces POS étant ensuite au moins en partie utilisés pour l'hydrosilylation de précurseurs oléfiniques de tout ou partie des greffons **Gf, Fa** et éventuellement **G**_{**alk**} **;**
en présence d'une quantité efficace de catalyseur métallique d'hydrosilylation, de préférence à base de platine.

Dans les cas où l'on ne greffe tout d'abord, par hydrosilylation, qu'une partie des greffons **Gf, Fa** voire **G**_{**alk**}, l'apport de la partie manquante peut-être effectué en un ou plusieurs greffages faisant intervenir un mécanisme réactionnel chimique quelconque.
Cette fonctionnalisation par segments peut également être de mise pour les autres substituants **Fr, Frc** ou alkyle du POS **A**.

En plus du POS **A**, la composition silicone perfluorée mise en oeuvre dans le cadre de l'utilisation selon l'invention, peut comporter un ou plusieurs additifs fonctionnels **B**, tels que des tensioactifs, des charges, des plastifiants, des agents viscosifiants, des fluidifiants, des stabilisants, des biocides ou autres.
S'agissant plus spécifiquement de l'application revêtements et/ou imprégnations anti-salissures pour supports textiles, les additifs fonctionnels **B** sont par exemple :
- des résines thermocondensables pour améliorer la résistance dimensionnelle, la tenue aux lavages ou encore apporter une certaine rigidité ;
- des adoucissants qui donnent un toucher doux, améliorent le comportement à la confection et favorisent les traitements mécaniques (émerissage, grattage, calandrage) ;
- des agents antistatiques qui facilitent l'écoulement des charges électrostatiques accumulées par les textiles au cours des différentes opérations de séchage, polymérisation ... ;
- des agents ignifugeants qui diminuent l'inflammabilité et empêchent la propagation de la flamme ;
- des agents fongicides et bactéricides qui protègent des moisissures et des pourrissements ;
- des produits que l'on désigne communément sous le nom d'extendeurs, qui peuvent être, par exemple, des résines de mélamine modifiées par des acides gras, des mélanges de cires et de sels de zirconium et qui, en combinaison avec des résines fluorées, en améliorent sensiblement, dans certains cas, les propriétés.

Dans la mesure où l'on a vu supra qu'il est envisageable, selon une variante secondaire, de catalyser les réactions qui permettent la liaison entre les fonctions d'accrochage **F**_{**a1 à 4**} des radicaux **F**_{**a**} du POS **A** et le support sur lequel est susceptible d'être appliquée la susdite composition silicone, cette dernière peut éventuellement comprendre au moins un catalyseur C propre à favoriser les réactions considérées.

Suivant un autre de ses objets, la présente invention concerne des compositions silicones perhalogénées, de préférence perfluorées, à titre de produits industriels nouveaux.

Ces compositions nouvelles peuvent, notamment, être mises en oeuvre dans l'utilisation selon l'invention.

Une première famille de ces nouvelles compositions est constituée par celles comportant au moins un POS **A** du type de celui défini dans la revendication, à la différence près que **F**_{**a**} correspond à des radicaux fonctionnels d'accrochage identiques ou différents entre eux et choisis dans le groupe des radicaux porteurs d'au moins une fonction **F**_{**a1**} amine, de préférence pipéridinyle stériquement encombré e.g. : HALS, et/ou au moins une fonction **F**_{**a2**} époxy et/ou au moins une fonction **F**_{**a3**} polyéther, à l'exclusion des fonctions carboxyliques **F**_{**a4**}.

Une deuxième famille de ces nouvelles compositions est constituée par celles comportant au moins un POS **A** dù type de celui défini supra page 7 ligne 10 à page 8 ligne 5, à la différence près
- que **F**_{**a**} correspond à des radicaux fonctionnels d'accrochage identiques ou différents entre eux et choisis dans le groupe des radicaux porteurs d'au moins une fonction **F**_{**a4**} carboxylique
- et que le POS **A** comprend, par molécule, au moins un groupement **G**_{**alk**} de formule **V** tel que défini ci-dessus dans laquelle X = Rh₂.

Les nouvelles compositions appartenant à ces deux familles, peuvent, à l'instar de toutes celles mises en oeuvre dans le cadre de l'utilisation selon l'invention et définies ci-avant, éventuellement comporter des additifs fonctionnels **B** et/ou au moins un catalyseur C comme décrit supra.
Grâce à la nature particulière des greffons perfluorés **G**_{***t***}, des radicaux fonctionnels d'accrochage **Fa** et des éventuels greffons **G**_{**alk**} du POS **A**, les compositions selon l'invention permettent de conférer de manière durable, une basse tension de surface aux solides sur lesquels elles sont appliquées ou dans lesquels elles sont contenues. Ces compositions procurent ainsi des propriétés d'oléo et/ou d'hydrophobie stables dans le temps. Ce résultat est particulièrement avantageux et intéressant pour les applications du type revêtements, aprêts ou imprégnations :
○ de textiles,
○ de bâtiments (enduits, peintures, peintures anti-graffitis, vernis)
○ ou de tout autre article à protéger contre les tâches et les salissures et à imperméabiliser (e.g. peintures « anti-fouling » pour bateaux).

Ces compositions silicones fluorées selon l'invention peuvent également rentrer dans la formulation de mastic, de matériau de jointage et d'étanchéification, de lubrifiant, d'agent anti-adhérent, d'anti-mousse, d'agent anti-gras.

L'abaissement de la tension de surface induit par les compositions silicones fluorées selon l'invention, c'est-à-dire les propriétés d'oléo et/ou d'hydrophobie, peut être ajusté en contrôlant les proportions de motifs **D** greffés ou non par des motifs fluorés et/ou alkylés. Cela correspond à la variation des indices pⁱ à p^{v} dans la formule (**VI**) ci-dessus des POS **A**.

Divers additifs fonctionnels **B** peuvent être incorporés aux compositions de l'invention selon les applications envisagées.

Les compositions selon l'invention sont préparées par mélange des différents constituants **A** et éventuellement **B** et/ou **C**. Avant d'être utilisées ou incorporées dans des formulations d'utilisation, ces compositions peuvent être en solution, en émulsion ou bien encore sous forme de masse fondue.

Selon une caractéristique de l'invention, les POS **A** selon l'invention, sont obtenus par hydrosilylation de précurseurs oléfiniques, à double liaison terminale (par exemple vinylique ou allylique) des différents greffons ou substituants envisagés pour ces POS **A**, c'est-à-dire : **Gf, Fa, G**_{**alk**}**.**
Ces hydrosilylations s'opèrent, de manière connue en soi, en présence d'une quantité efficace de catalyseur industriel métallique, choisi parmi les composés à base de nickel paladium ou platine, de préférence à base de platine. Cela peut être par exemple un catalyseur de Karstedt, avantageusement employé en faible quantité e.g. de l'ordre de 10 à 50 ppm par rapport aux composés POS considérés, avant hydrosilylation (huile SiH). L'hydrosilylation est une technique simple et bien connue de l'homme de l'art. Elle bénéficie d'une cinétique rapide et permet d'atteindre des rendements et des taux de conversion des motifs SiH particulièrement élevés. Les conditions d'hydrosilylation sont classiques et donc aisément déterminables par l'homme du métier.
En pratique, l'hydrosilylation se déroule en autant de phases qu'il existe de réactifs oléfiniques différents. Le milieu réactionnel est mis sous agitation et porté à une température comprise entre 50 et 150° C. La réaction se déroule à pression atmosphérique et généralement sur une durée de plusieurs heures. Le taux de transformation des motifs SiH est supérieur à 90 % en nombre.

On a vu que le greffage d'un substituant particulier par exemple : **Gf, Fa** ou **G**_{**alk**} peut être décomposé en plusieurs étapes. La première de ces étapes est une hydrosilylation, par les motifs SiH du POS, d'un précurseur du substituant correspondant seulement à une partie dudit substituant. On vient ensuite relier à ce premier maillon fixe par hydrosilylation sur la chaîne principale du POS, un ou plusieurs autres maillons ou composés d'espacement jusqu'à obtenir le greffon ou le substituant dans son intégralité.
La liaison des différents maillons les uns aux autres peut être réalisée par différents mécanismes réactionnels chimiques connus. e.g. : estérification, addition, substitution...
Dans le cas des greffons ou radicaux **Gf, Fa, G**_{**alk**}**,** de formule **I, I.1, IV, V** ou analogues, il est envisageable de réaliser le greffage en fixant tout d'abord par hydrosilylation sur le POS, un radical dont l'une des extrémités comporte une insaturation éthylénique et dont l'autre extrémité présente les deux fonctions carboxyles sous forme :
- COOR', avec R' = radical hydrocarboné,
- COO⁻... X⁺, avec X = cation métallique alcalin ou ammonium.
Ces deux fonctions carboxyles peuvent également se présenter sous forme anhydride. Il est aisé de faire réagir sur ces fonctions réactives carboxyles ou anhydride, des maillons intercalaires ou des maillons terminaux porteurs de la ou des fonctionnalités que l'on cherche à greffer sur le POS. Ainsi, dans le cas où l'on a affaire à un premier maillon à extrémité anhydride, il est envisageable de soumettre au moins une partie des fonctions anhydrides fixées sur le POS, à une hydrolyse de manière à générer des extrémités carboxyliques libres et à estérifier ensuite au moins une partie desdites extrémités, à l'aide de réactifs permettant de construire le greffon dans son intégralité.

Parmi les POS susceptibles d'être utilisés comme produit de départ pour l'obtention des POS **A**, on peut citer, à titre d'exemples, les POS linéaires tels que les polyméthylhydrogénosiloxanes comprenant de 10 à 100 motifs D de type SiMeH ou SiMeH et SiMe₂, ou les POS cycliques tels que le tétraméthylcyclosiloxane D'4.

L'invention vise également dans un autre de ses objets, un procédé de réalisation de revêtements et/ou d'imprégnations hydrophobes et/ou oléophobes sur un support, ce procédé étant caractérisé en ce qu'il consiste essentiellement :
➢ à préparer et/ou mettre en oeuvre une composition telle que définie supra,
➢ à appliquer cette composition sur un support de façon à obtenir un film et/ou à l'imprégner,
➢ et éventuellement à évaporer le solvant dans le cas où la composition se présente sous forme de solution.

Le support considéré peut être un textile ou tout autre matériau solide tel que e.g. : métal, ciment, béton, bois, plastique, composite, etc.

Les techniques d'application relèvent des connaissances générales de chaque domaine particulier d'utilisation. Les exemples qui suivent donnent quelques illustrations à cet égard.

### APPLICATION INDUSTRIELLE :

La présente invention concerne également les produits ou les formulations dans lesquelles la composition qu'elle concerne peut être incorporée. Il s'agit, entre autres, de :
- précurseurs de revêtement,
- enduits,
- peintures (peintures « antifouling »...),
- vernis,
- lubrifiants,
- agents abaisseurs de tension de surface,
- agents antisalissures,
- agents antiadhérents,
- agents antimousses,
- agents oléophobes et/ou hydrophobes,
- matières premières pour la réalisation d'élastomères ou de films résistants aux agressions chimiques et aux solvants,
- aprêts textiles.

Sont également compris dans le cadre de l'invention, les films et/ou les revêtements réalisés à partir de la composition telle que définie ci-dessus.

### EXEMPLES :

### EXEMPLE 1 : PREPARATION DE COMPOSITIONS SILICONES

### 1) Synthèse monomère

### Exemple 1 : synthèse de l'allyldiester malonique de l'hexadécanol

Dans un réacteur de 2000 cc, on introduit 968 g (4 moles) d'hexadécanol (ALDRICH), 440 g de diéthylallylmalonate (2,2 moles) et 7,04 g de titanate de butyle. La masse réactionnelle est portée à 130°C pour éliminer l'éthanol formé lors de la réaction. Après 72 h de réaction, 95 % de l'éthanol attendu est éliminé (174,5 g) et le produit est récupéré par précipitation dans le méthanol. L'analyse RMN confirme la pureté du produit. (Cf exemple IX EP N° 96 420 251.9).

### 2) Synthèse polymères

Le suivi de la réaction est assuré par le dosage volumétrique des SiH et la disparition par IR du pic à 2150 cm⁻¹ correpondant à la fonction SiH et des pics à 3085 cm⁻¹ et 1645 cm⁻¹ correspondant aux insaturations.

### Exemple 2 :

Dans un réacteur de 500 cc, on introduit 101,2 g de 1-2 diméthoxyéthane (PROLABO) et on rajoute 3,7 mg de Pt sous la forme d'un complexe organométallique à 11,2 % de platine.
La température est portée à 90°C et on coule de façon simultanée en 1 heure 29,64 g (0,05 moles) du diester hydrocarboné de l'exemple 1 (sous forme fondue, θ = 60°C) et 88,3 g d'un fluide à SiH titrant 2,55 moles de fonctions SiH /Kg (0,225 moles de fonctions SiH et de formule : MD₅₀ D'₅₀ M
[M = (Me)₃ SiO_{1/4}-/D = (Me)₂SiO_{2/4} /-D' = MeHSiO_{2/4}].
Après 3 heures de réaction, un dosage IR indique que les insaturations ont disparu et on coule en 30 minutes 84,6 g (0,075 moles) du diester perfluoré du diéthylallylmalonate (sous forme fondue, θ = 60°C). Après 16 heures de réaction, un dosage IR indique que les insaturations ont disparu et on rajoute 19,7 g de 4-allyloxy 2,2,6,6 tétraméthylpipéridine (0,1 moles). Après 20 h de réaction au total, le taux de transformation des motifs SiH est de 95 %.
Le produit est récupéré par précipitation dans le méthanol et est séché sous vide à l'étuve à température ambiante pendant 48 h.
Bilan matière = 92 %
Le produit obtenu est le suivant :

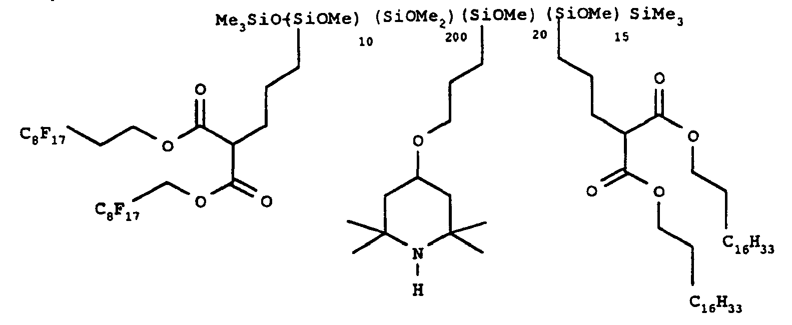

### Exemple 3 :

Dans un réacteur de 150 cc, on introduit 13,4 g de toluène (PROLABO). On chauffe à 90°C et on rajoute 1,2 mg de Pt sous la forme d'un complexe organométallique à 11,2 % de platine.
On coule en 3 heures une solution consitutée de 40 g de toluène (PROLABO), de 54 g (0,052 moles) du diester perfluoré du diéthylallylmalonate et 20 g fluide à SiH de l'exemple 2 titrant 2,55 moles de fonctions SiH /Kg (0,05 moles de fonctions SiH). Après 4h30 de réaction le taux de transformation des motifs SiH est de 99,5%.
Le produit est récupéré par précipitation,dans le méthanol et est séché sous vide à l'étuve à température ambiante pendant 48 h.
Bilan matière = 91,8 %
Le produit obtenu est le suivant :

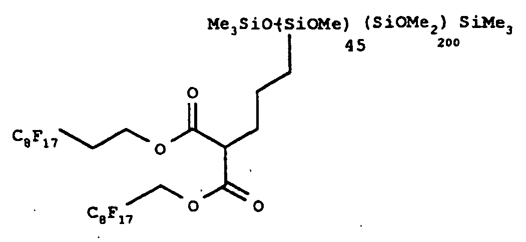

### Exemple 4 :

Dans un réacteur de 500 cc, on introduit 70 g d'hexaméthyldisiloxane. On chauffe à 90°C et on rajoute 19 mg de Pt sous la forme d'un complexe organométallique à 11,2 % de platine.
On coule en 3 heures une solution consitutée de 100 g d'hexaméthyldisiloxane, de 129,5 g (0,125 moles) du diester perfluoré du diéthylallylmalonate et et 82,9 g d'un fluide à SiH titrant 1,64 moles de fonctions SiH /Kg (0,135 moles de fonctions SiH comme décrit à l'exemple 2). Après 8 h de réaction le taux de transformation des motifs SiH est de 92,6 % et on rajoute 1,98 g de 4-allyloxy 2,2,6,6 tétraméthylpipéridine (0,01 moles). Après 12 h de réaction au total, le taux de transformation des motifs SiH par IR est de 100 %.
Le produit est récupéré par dévolatilisation (3h, 130°C, 2 mbars)
Bilan matière = 95,7 %

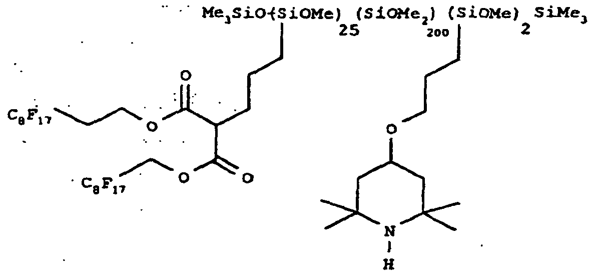

### Exemple 5 :

Dans un réacteur de 100 cc, on introduit 30 g d'hexaméthyldisiloxane et on rajoute 0,9 mg de Pt sous la forme d'un complexe organométallique à 11,2 % de platine.
La température est portée à 90°C et on coule de façon simultanée en 1 h 25,07 g (0,04 moles) du monoester perfluoré du diéthylallylmalonate et 12,7 g d'un fluide à SiH titrant 3,92 moles de fonctions SiH /Kg (0,049 moles de fonctions SiH) préparé comme décrit à l'exemple 2.
Après 1 heure de réaction, le taux de transformation des motifs SiH est de 72,5 % et on coule en 10 minutes 3,94 g (0,02 moles) de 4-allyloxy 2,2,6,6 tétraméthylpipéridine. Après 8 h de réaction au total, le taux de transformation des motifs SiH est de 100 %.
Le produit est récupéré par dévolatilisation (5h, 150°C, 5 mbars)
Bilan matière = 96 %

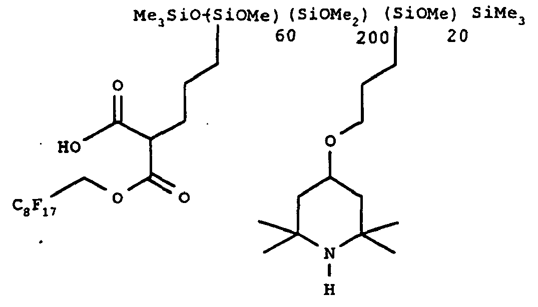

### Exemple 6 :

Dans un réacteur de 250 cc, on introduit 40 g de toluène (PROLABO) et on rajoute 2,8 mg de Pt sous la forme d'un complexe organométallique à 11,2 % de platine.
La température est portée à 90°C et on coule de façon simultanée en 30 minutes 114,6 g (0,194 moles) du diester hydrocarboné de l'exemple 1 (sous forme fondue, θ = 60°C) et 17,52 g d'un fluide à SiH titrant 15,8 moles de fonctions SiH/Kg (0,276 moles de fonctions SiH) préparé comme décrit à l'exemple 2.
Après 19 heures de réaction, un dosage IR indique que les insaturations ont disparu et on coule en 30 minutes 62,3 g (0,055 moles) du diester perfluoré du diéthylallylmalonate (sous forme fondue, θ = 60°C). Après 36 heures de réaction, un dosage IR indique que les insaturations ont disparu et on rajoute 5,42 g de 4-allyloxy 2,2,6,6 tétraméthylpipéridine (0,0297 moles) et 2,8 mg de Pt. Après 192 h de réaction au total, le taux de transformation des motifs-SiH est de 98,8 %.
Le produit est récupéré par dévolatilisation (8h, 160°C, 9 mbars)
Bilan matière = 80 %

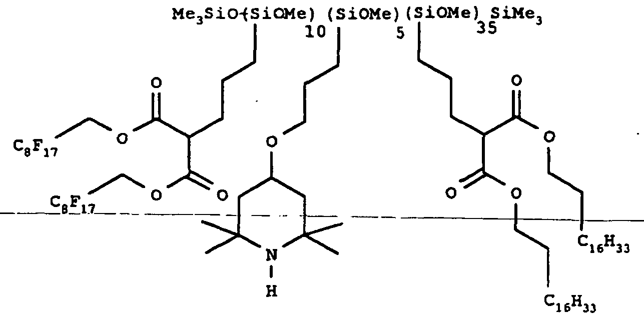

### Exemple 7 :

Dans un réacteur de 250 cc, on introduit 55 g de toluène (PROLABO) et on rajoute 1,8 mg de Pt sous la forme d'un complexe organométallique à 11,2 % de platine.
La température est portée à 90°C et on coule de façon simultanée en 50 minutes 22,8 g (0,136 moles) de 1-dodécène (ALDRICH) et 17,6 g d'un fluide à SiH titrant 15,8 moles de fonctions SiH /Kg ( 0,279 moles de fonctions SiH), préparé comme décrit à l'exemple 2.
Après 4 heures de réaction, le taux de transformation des motifs SiH est de 55 % et on coule en 30 minutes 54,7 g (0,109 moles) de l'éther allylique de l'heptadécafluorodécanol. Après 15 heures de réaction, le taux de transformation des motifs SiH est de 86 % et on rajoute 5,45 g de 4-allyloxy 2,2,6,6 tétraméthylpipéridine (0,0297 moles). Après 51 h de réaction au total, le taux de transformation des motifs SiH est de 98,3 %.
Le produit est récupéré par dévolatilisation (4h, 140°C, 3 mbars)
Bilan matière = 74,8 %

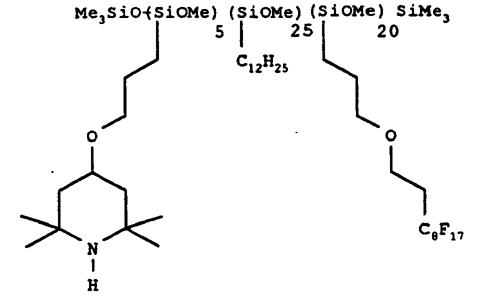

### 3) Evaluation des performances

L'évaluation des performances est réalisée à partir de solution de polymères dans l'acétate d'isopropyle selon les tests normalisés AATCC 118 (Oil Repellency-OR-) et EN 24920 (Spray Test).

### 3.1. Application sur tissu polyester/coton à 2og/l en solution dans l'acétate d'isopropyle :

Le Tableau 1 ci-dessous donne les résultats obtenus

**Tableau 1**

| Exemples | % fluor | Spray Test | | | | | OR | | | | |
|---|---|---|---|---|---|---|---|---|---|---|---|
| | | Initial | 1 lav | 1 lav + rep | 5 lav | 5 lav + rep | Initial | 1 lav | 1 lav + rep | 5 lav | 5 lav + rep |
| 2 | 22 | 80 | 70 | 70 | 50 | 50 | 5 | 5 | 4 | 4 | 4 |
| 3 | 45 | 70 | 50 | 50 | 0 | 0 | 0 | 0 | 0 | 0 | 0 |
| 4 | 38 | 70 | 70 | 70 | 50 | 70 | 5 | 5 | 5 | 1 | 3 |
| 5 | 31,9 | 70 | 50 | 50 | 0 | 50 | 3 | 1 | 1 | 0 | 0 |
| 6 | 19,8 | 100 | 50 | 90 | 0 | 70 | 3 | 3 | 2 | 0 | 0 |
| 7 | 35,5 | 70 | 0 | 0 | 0 0 | 0 | 0 | 0 | 0 | 0 | 0 |

| | | | | | | | | | | | |
|---|---|---|---|---|---|---|---|---|---|---|---|
| Légende : rep = repassage - lav = lavage. | | | | | | | | | | | |

La permanence des propriétés ne peut être obtenue sans interactions avec le substrat (exemple 3) malgré une teneur en fluor élevée.
La présence d'une rotule diester perfluorée permet également d'obtenir des propriétés sensiblement supérieures à celles obtenues avec des polymères à base d'allylether perfluoré (exemple 7) ou de rotule monoperfluorée (exemple 5) alors que les teneurs en fluor sont inférieures (exemples 2, 6).
La présence ou non de fonctions hydrocarbonées permet de moduler le caractère oléophobe ou hydrophobe du polymère (exemples 6 et 4).

### 3.2. Application en émulsion à 20g/l sur polyester coton

Le Tableau 2 ci-dessous donne les résultats obtenus

**Tableau 2**

| exemples | extrait sec % | % fluor | Spray Test | | | OR | | |
|---|---|---|---|---|---|---|---|---|
| | | | Initial | 5 lav | 5 lav + rep | Initial | 5 lav | 5 lav + rep |
| 2 | 15 | 22 | 80 | 70 | 70 | 5 | 5 | 5 |
| 3 | | 45 | 70 | 50 | 50 | 3 | 0 | 0 |
| 4 | | 38 | 80 | 70 | 70 | 5 | 4 | 5 |
| **503*** | | | 100 | 80 | 100 | 6 | 1 | 5 |
| **FC251**** | | | 100 | 70 | 80 | 5 | 1 | 2 |

| | | | | | | | | |
|---|---|---|---|---|---|---|---|---|
| * 503 = FORAPERLE® 503 de la Société ATOCHEM | | | | | | | | |
| ** FC251 = SCOTCHGUARD® de la Société 3 M. | | | | | | | | |

### 4) Evaluation d'autres polymères

### 4.1. Préparation de polymères POS A substitués par des Gf bifides et des Fa = HALS de la même façon qu'à l'exemple 5.

### 4.2. Tests oil Repellency (OR) et Water Repellency (WR) dans différents solvants .

Les tests OR (normé AATCC 118) et WR (norme ISO 4920) sont réalisés comme suit :
- dépôt de 700 ppm de Fluor (imprégnation d'un rond de tapis en polyamide de 15 g) à partir de différentes solutions de POS **A** à greffons **Gf** et à **Fa** = HALS.
- séchage 6 min à 80° C,
- traitement thermique 4 min à 140° C.

### 4.3. Résultats

Les résultats sont donnés dans le Tableau 3 ci-dessous.

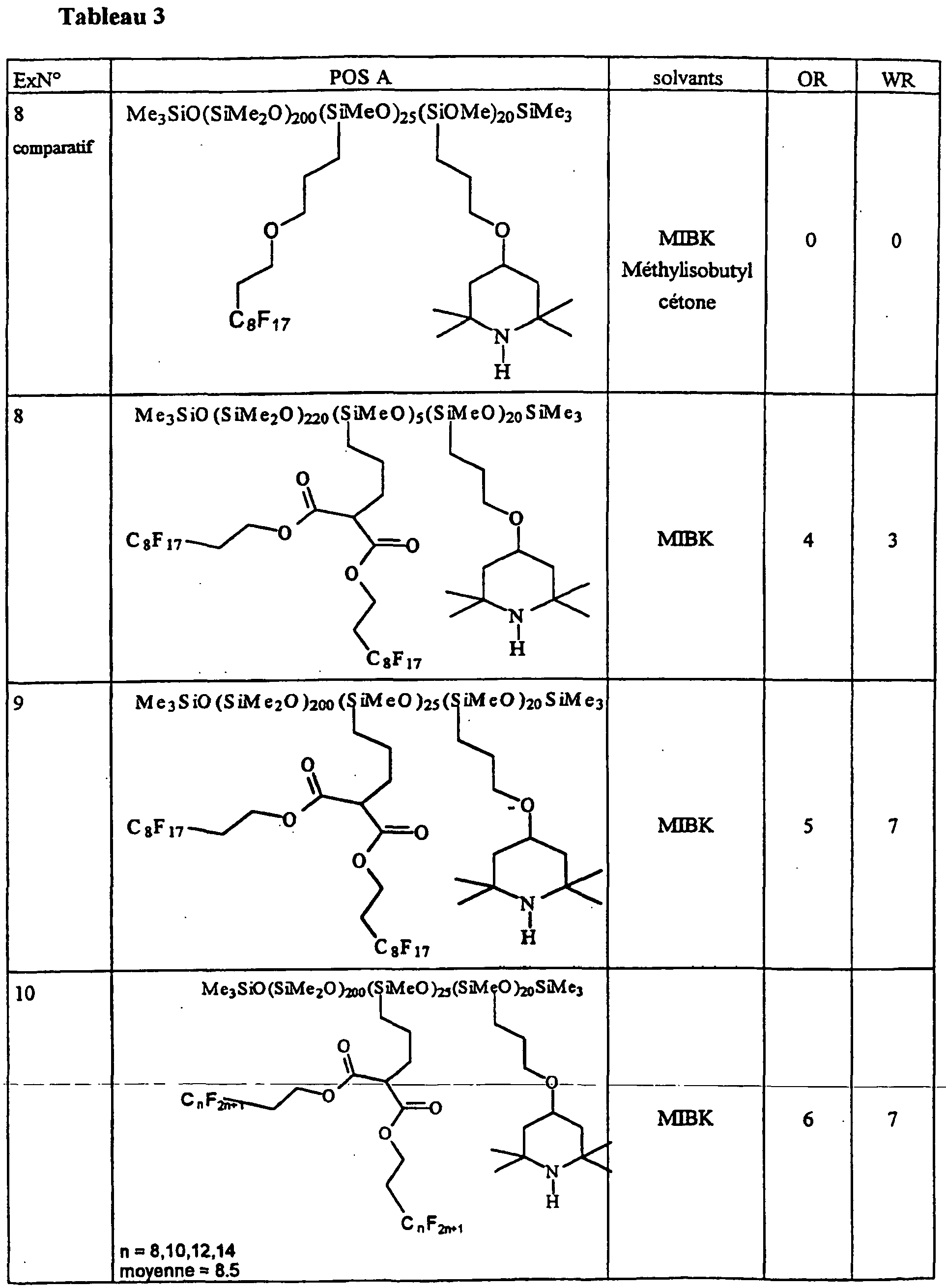

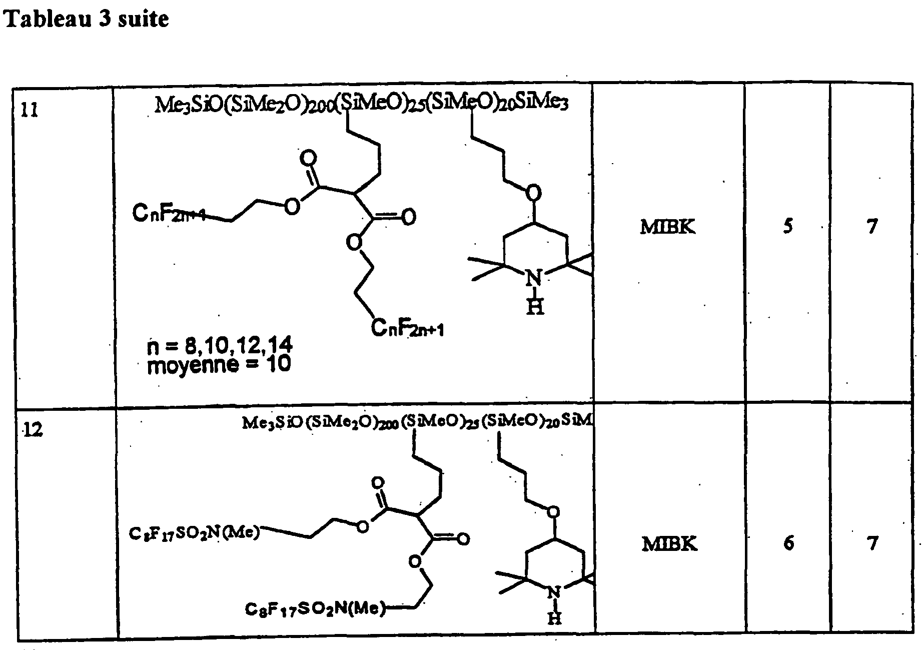

Le classement de ces POS A peut s'effectuer comme tel :
**O** : Mauvaises performances
**XX :** bonnes performances
Le Tableau 4 ci-dessous donne les résultats obtenus

**Tableau 4**

| **O** | **XX** |
|---|---|
| | |
| | 9 |
| | 8 |
| | 10 |
| | 11 |
| 8 comp | 12 |

### 5) application en émulsion

### 5.1. Méthodologie

On utilise le même support que pour l'application en solvant et on dépose 700 ppm de fluor (pistolage d'un rond de tapis polyamide de 15 g) à partir d'émulsions. Le tapis subit ensuite un séchage 6 minutes à 80°C puis un traitement thermique 4 minutes à 140°C.

Les émulsions sont réalisées à partir du POS A de l'exemple 9 et deux produits commerciaux sont testés dans les mêmes conditions à titre d'exemples comparatifs. (Il s'agit des produits AG 850 de ASAHI et FC 396 de 3M, référencés respectivement comme exemples 17 comp et 18 comp).

### 5.2. Composition (en % poids) pour les exemples 13 à 16

**Tableau 5**

| constituants | n° exemple | | | |
|---|---|---|---|---|
| | 13 | 14 | 15 | 16 |
| POS A = fluorosilicone exemple n° 9 | 19.9 | 13.6 | 25.1 | 13.6 |
| Méthylisobutylcétone | 14.9 | 28.9 | 22.3 | 10.2 |
| acide acétique | 0.5 | 0.17 | 0.51 | 0.63 |
| eau | 64.7 | 41.8 | 50.2 | 41.8 |
| Genapol X050 | | 0.68 | | |
| Génapol X080 | | | 1.25 | 0.68 |

### 5.3. Résultats anti-salissure

**Tableau 6**

| n° exemple | OR | WR |
|---|---|---|
| | | |
| 13 | 4 | 4 |
| 14 | 4 | 4 |
| 15 | 4 | 5 |
| 16 | 4 | 4 |
| 17 comp (ASAHI) | 4 | 4 |
| 18 comp (3M) | 5 | 3 |

### 5.4. Evaluation de la permanence

Le caractère de permanence du revêtement est mis en évidence par plusieurs techniques.
- Caractérisation des angles de contact sur un film de Polyamide PA 66 avant et après extraction par un solvant
- Evaluation des propriétés anti-salissure avant et après lavage sur différents supports

### 5.4.1. Mesures d'angles de contact

La procédure de préparation des échantillons est la suivante :
- extraction au Sohxlet avec du MeOH des films de PA 66
- séchage 48 h à 80°C
- enduction avec des solutions à 1% dans fréon par spin-coating
- séchage 4' à 140°C
- extraction au Sohxlet avec du MeOH pendant 2 h (80°C)
- séchage 4' à 140°C
Le tableau 7 suivant présente les valeurs d'énergie de surface calculée à partir des angles formés avec le diodométhane et l'eau.

**Tableau 7**

| n°exemple | énergie de surface (mN/m) | |
|---|---|---|
| | avant extraction | après extraction |
| | | |
| 9 | 11.2 | 14.6 |
| 10 | 11.4 | 13:9 |
| 17 comp | 8 | 21 |

Les valeurs obtenues avant extraction correspondent à des énergies de surface de composés perfluorés. Après extraction 2 heures avec du méthanol à 80°C, on constate une permanence du revêtement sauf dans le cas de l'échantillon 17 comp qui ne comporte pas de fonctions acides ou HALS.

### 5.4.2. Evaluation de la résistance au lavage

L'évaluation est réalisée sur trois types de support (polyamide micronfires, polyester, coton). L'application est réalisée par pistolage à partir d'une dilution des émulsions suivantes de façon à déposer dans chaque cas 2000 ppm de fluor sur le textile.
Les exemples 21 comp et 22 comp sont des exemples comparatifs de produits perfluorés pour le traitement des textiles (3M). L'émulsion est utilisée telle quelle (exemple 21 comp) et selon les préconisations du fournisseur (exemple 22 comp).
Le Tableau 8 qui suit donne les compositions d'émulsion pour les exemples 19, 20, 21 comp, 22 comp.

**Tableau 8**

| Composition émulsion | n° exemple | | | |
|---|---|---|---|---|
| | 19 | 20 | 21 comp | 22 comp |
| fluorosilicone n° 8 comp | 19 | | | |
| fluorosilicone n°9 | | 19.7 | | |
| Méthylisobutylcétone | 14.8 | 14.8 | | |
| acide acétique | | 0.5 | | 0.12 |
| eau | 65.2 | 64 | | 87.65 |
| Genapol X080 | 1 | 1 | | |
| FC251(3M) | | | 100 | 2.13 |
| Quedocur FF (THOR) | | | | 8 |
| Chlorure de Magnésium | | | | 2 |

Les performances sur trois types de tissus :
- coton : Tableau 9
- PET / coton : Tableau 10
- Polyamide µfibres : Tableau 11 sont évaluées à l'état initial, après 5 lavages à 40°C pendant 40 minutes puis après repassage.

**Tableau 9 COTON**

| exemple | initial | | 5 lavages | | 5 lavages + repassage | |
|---|---|---|---|---|---|---|
| | OR | spray test | OR | spray test | OR | spray test |
| 19 | 2 | 50 | 0 | 0 | 0 | 0 |
| 20 | 5 | 70 | 2 | 50 | 4 | 50 |
| 21 comp | 3 | 90 | 1 | 50 | 0 | 50 |
| 22 comp | 6 | 90 | 0 | 50 | 0 | 50 |

**Tableau 10 PET/COTON**

| exemple | initial | | 5 lavages | | 5 lavages + repassage | |
|---|---|---|---|---|---|---|
| | OR | spray test | OR | spray test | OR | spray test |
| 19 | 3 | 70 | 0 | 50 | 0 | 50 |
| 20 | 5 | 70 | 4 | 50 | 5 | 70 |
| 21 comp | 5 | 100 | 1 | 70 | 2 | 80 |
| 22 comp | 6 | 80 | 0 | 70 | 4 | 70 |

**Tableau 11 POLYAMIDE µFIBRES**

| exemple | initial | | 5 lavages | | 5 lavages + repassage | |
|---|---|---|---|---|---|---|
| | OR | spray test | OR | spray test | OR | spray test |
| 19 | 3 | 50 | 0 | 0 | 0 | 50 |
| 20 | 5 | 70 | 2 | 50 | 0 | 50 |
| 21 comp | 6 | 100 | 3 | 70 | 6 | 100 |
| 22 comp | 6 | 100 | 0 | 70 | 6 | 80 |

## Revendications

1. Utilisation d'une composition silicone du type de celles comprenant au moins un POS perfluoré **A**, et éventuellement au moins un additif fonctionnel **B**, pour la réalisation de revêtements et/ou d'imprégnations hydrophobes et/ou oléophobes à basse énergie de surface,
**caractérisée en ce que**
le POS A est porteur, par molécule :
→ d'un ou plusieurs greffons **Gf** perfluorés identiques ou différents entre eux et de formule : 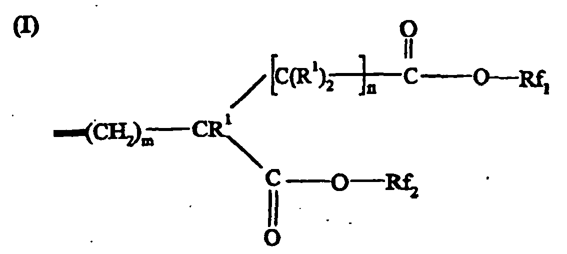 dans laquelle :
- les radicaux R¹ représentent indépendamment l'hydrogène ou un alkyle en C₁-C₆
- Rf₁ et Rf₂ sont des radicaux perhalogénés - de préférence perfluorés - et plus préférentiellement encore un radical perfluoroalkyle linéaire ou ramifié de formule : 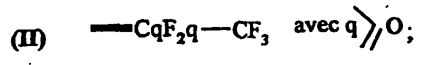 où 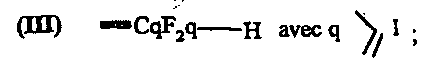
- les valences libres représentées en gras 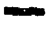 , étant rattachées indirectement au silicium de la molécule considérée, ce rattachement indirect étant réalisé à l'aide de plusieurs maillons,
- m = 1 à 10 ;
- n = 0 ou 4 ;
→ d'un ou plusieurs radicaux fonctionnels d'accrochage **Fa** identiques ou différents entre eux, choisis dans le groupe des radicaux porteurs d'au moins une fonction **f**_{**a1**} amine, de préférence amine constituée par un groupe pipéridinyle stériquement encombré et ses dérivés ; et/ou d'au moins une fonction **f**_{**a2**} époxy et/ou d'au moins une fonction **f**_{**a3**} (poly)éther ; et/ou d'au moins une fonction **f**_{**a4**} carboxylique
→ et éventuellement d'un ou plusieurs groupements alkyles **G**_{**alk**} linéaires ou ramifiés (de préférence linéaires), comprenant au moins 6, de préférence au moins 8 et plus préférentiellement encore entre 10 et 20 atomes de carbone.

2. Utilisation selon la revendication 1, **caractérisée en ce que** le POS **A** est porteur, par molécule d'un ou plusieurs Greffons **Gfh** perfluorés identiques ou différents entre eux ét de formule **(I.1)** : 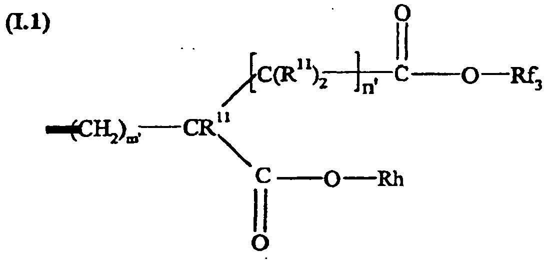 dans laquelle :
- R¹¹, Rf₃, m', n' répondent aux mêmes définitions que celles données pour R¹, Rf₁, m, n dans la revendication 1.
- Rh est un radical alkyle linéaire ou ramifié, de préférence linéaire en C₆-C₄₀ et plus préférentiellement en C₆-C₂₀.

3. Utilisation selon la revendication 1 ou 2, **caractérisée en ce que** le POS **A** est porteur, par molécule, de radicaux fonctionnels d'accrochage **f**_{**a4**} carboxyliques de formule **(IV)** suivante : 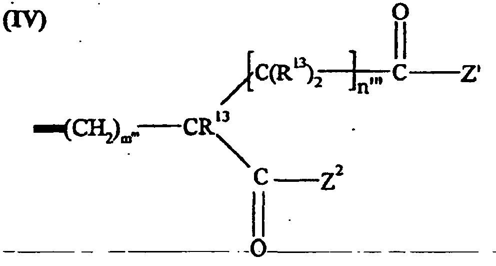 dans laquelle :
- R¹³, m''', n''' répondent aux mêmes définitions que celles données supra en légende de la formule (**I.1**) respectivement pour R¹¹, m' et n ' ;
- Z¹, Z² correspondent à -OH ou forment ensemble un pont -O-.

4. Utilisation selon l'une quelconque des revendications 1 à 3, **caractérisée en ce que** le POS **A** est porteur, par molécule, d'un ou plusieurs groupement **G**ₐₗₖ identiques ou différents entre eux et de formule (**V**) : 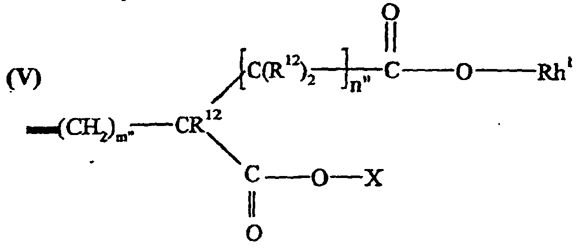 dans laquelle :
- R¹², m", n" et Rh₁ répondent aux mêmes définitions que celles données dans la revendication 2 respectivement pour R¹¹, m', n' et Rh,
- X correspond à un radical Rh² répondant à la même définition que Rh¹ dans la revendication 2 ou à l'hydrogène ou bien encore à un radical hydrocarboné différent de Rh¹ et de Rh².

5. Utilisation selon l'une quelconque des revendications 1 à 4 **caractérisée en ce que** la composition comprend un ou plusieurs POS **A** répondant à la formule (**VI**) suivante: 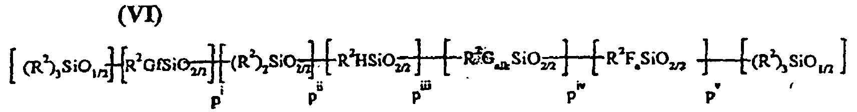 avec
□ **Gf, F**_{**a**} représentant indépendamment et respectivement des greffons perfluorés et des radicaux porteurs de fonctions **F**_{**a**}, tels que définis supra ;
□ R² identiques ou différents entre eux = méthyle, propyle ou butyle ;
□ Gₐₗₖ identiques ou différents entre eux = alkyle linéaire ou ramifié, de préférence en C₆-C₄₀, et plus préférentiellement en C₆₋C₂₀ ;
□ 0 < pⁱ, de préférence 1 ≤ pⁱ ≤ 100 ;
□ 0 ≤ pⁱⁱ, de préférence 0 ≤ pⁱⁱ ≤ 500 ;
□ 0 ≤ pⁱⁱⁱ, de préférence 0 ≤ pⁱⁱⁱ ≤ 10 ;
□ 0 ≤ p^{iv}, de préférence 0 ≤ p^{iv} ≤ 100 ;
□ 0 < p^{v}, de préférence 1 ≤ p^{v} ≤ 100 ;
□ Σp^{i à v} + 2 = 5 à 600, de préférence 10 à 400.

6. Utilisation selon l'une quelconque des revendications 1 à 5, **caractérisée en ce que** le POS **A** comprend outre les motifs siloxyles M et D des motifs siloxyles T et éventuellement Q.

7. Utilisation selon l'une quelconque des revendications 1 à 6 **caractérisé en ce que** le POS **A** est obtenu à partir de POS choisis parmi les polyalkylhydrogénosiloxanes, les motifs SiH de ces POS étant ensuite au moins en partie utilisés pour l'hydrosilylation de précurseurs oléfiniques de tout ou partie des greffons **Gf, Fa** et éventuellement **G**_{**alk**}**;**
en présence d'une quantité efficace de catalyseur métallique d'hydrosilylation, de préférence à base de platine.

8. Composition silicone perfluorée, susceptible d'être mise en oeuvre dans l'utilisation selon l'une quelconque des revendications 1 à 7, **caractérisée en ce qu'**elle comprend, au moins un POS **A** porteur, par molécule :
→ d'un ou plusieurs greffons **Gf** perfluorés identiques ou différents entre eux et de formule : 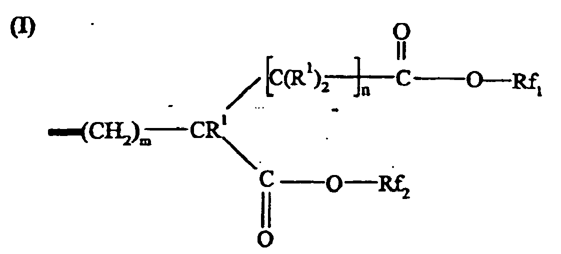 dans laquelle :
- les radicaux R¹ représentent indépendamment l'hydrogène ou un alkyle en C₁-C₆
- Rf₁ et Rf₂ sont des radicaux perhalogénés - de préférence perfluorés - et plus préférentiellement encore un radical perfluoroalkyle linéaire ou ramifié de formule: 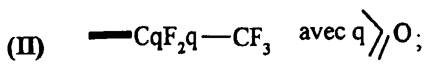 ou 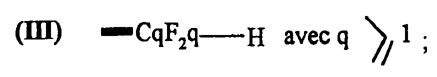
- m = 1 à 10 ;
- n = 0 ou 4 ;
→ d'un ou plusieurs radicaux fonctionnels d'accrochage **Fa** identiques ou différents entre eux, choisis dans le groupe des radicaux porteurs d'au moins une fonction **f**_{**a1**} amine, de préférence formée par un groupe pipéridinyle stériquement encombré et ses dérivés ; et/ou d'au moins une fonction **f**_{**a2**} époxy et/ou d'au moins une fonction **f**_{**a3**} polyéther ; à l'exclusion des fonctions **f**_{**a4**} carboxyliques ;
→ et éventuellement d'un ou plusieurs groupements alkyles **G**_{**alk**} linéaires ou ramifiés (de préférence linéaires), comprenant au moins 6, de préférence au moins 8 et plus préférentiellement encore entre 10 et 20 atomes de carbone.

9. Composition silicone perfluorée, susceptible d'être mise en oeuvre dans l'utilisation selon l'une quelconque des revendications 1 à 7, **caractérisée en ce qu'**elle comprend au moins un POS **A** porteur, par molécule :
→ d'un ou plusieurs greffons **Gf** perfluorés identiques ou différents entre eux et de formule. 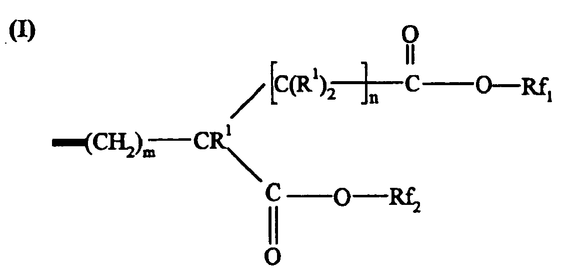 dans laquelle :
- les radicaux R¹ représentent indépendamment l'hydrogène ou un alkyle en C₁-C₆
- Rf₁ et Rf₂ sont des radicaux perhalogénés - de préférence perfluorés - et plus préférentiellement encore un radical perfluoroalkyle linéaire ou ramifié de formule : 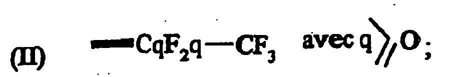 ou 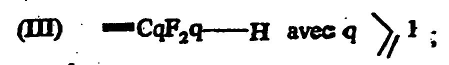
- les valences libres représentées en gras 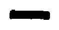 , étant rattachées indirectement au silicium de la molécule considérée ce rattachement indirect étant réalisé à l'aide de plusieurs maillons,
- m = 1 à 10 ;
- n = 0 ou 4 ;
→ d'un ou plusieurs radicaux fonctionnels d'accrochage **Fa** identiques ou différents entre eux, choisis dans le groupe des radicaux porteurs d'au moins une fonction **f**_{**a4**} carboxylique,
→ et d'un ou plusieurs groupements alkyles **G**_{**alk**} de formule **V** telle que donnée dans la revendication 4, et dans laquelle X = Rh₂.

10. Composition selon la revendication 8 ou 9 ou du type de celle mise en oeuvre dans l'utilisation selon l'une quelconque des revendications 1 à 7,
**caractérisée en ce qu'**elle comprend au moins un additif fonctionnel **B** et/ou au moins un catalyseur **C** apte à favoriser la réaction des fonctions d'accrochage f_{**a1 à 4**} avec un support sur lequel est susceptible d'être appliquée ladite composition.

11. Procédé de réalisation de revêtements et/ou d'imprégnations hydrophobes et/ou oléophobes sur un support **caractérisé en ce qu'**il consiste essentiellement :
➢ à préparer et/ou mettre en oeuvre une composition du type de celle mise en oeuvre dans l'utilisation selon l'une quelconque des revendications 1 à 7 ou une composition selon l'une quelconque des revendications 8 à 10 ;
➢ à appliquer cette composition sur un support de façon à obtenir un film et/ou à l'imprégner ;
➢ et éventuellement à évaporer le solvant dans le cas où la composition se présente sous forme de solution.

12. Précurseurs de revêtements, enduits, peintures, vernis **caractérisés en ce qu'**ils comprennent la composition du type de celle mise en oeuvre dans l'utilisation selon l'une quelconque des revendications 1 à 7 ou une composition selon l'une quelconque des revendications 8 à 10.

## Patentansprüche

1. Verwendung einer Silikon-Zusammensetzung vom Typ derjeniger, welche wenigstens ein perfluoriertes POS A, und gegebenenfalls wenigstens ein funktionelles Additiv B umfassen, zum Realisieren von Beschichtungen und/oder hydrophober und/oder oleophober Imprägnierungen niedriger Oberflächenspannung,
**dadurch gekennzeichnet, dass**:
das POS A pro Molekül trägt:
→ einen oder mehrere untereinander identische oder verschiedene perfluorierte(n) Pfropf(e) Gf gemäß der Formel: 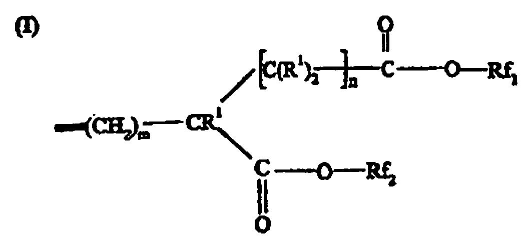 in welcher:
- die Radikale R¹ unabhängig voneinander Wasserstoff oder ein Alkyl aus C₁-C₆ repräsentieren,
- Rf₁ und Rf₂ perhalogenierte, bevorzugt perfluorierte - und noch stärker bevorzugt ein lineares oder verzweigtes Perfluoralkyl-Radikal(e) gemäß der Formel 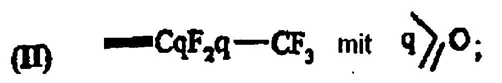 oder 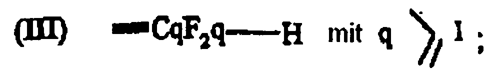 sind/ist, wobei
- die fettgedruckt 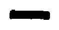 dargestellten freien Valenzen indirekt am Silizium des betrachteten Moleküls angegliedert sind, wobei dieses indirekte Angliedern mithilfe mehrerer Glieder realisiert ist,
- m=1 bis 10 beträgt;
- n=0 oder 4 beträgt;
→ ein oder mehrere untereinander identische oder verschiedene funktionelle(s) Koppel-Radikal(e) Fa, welche(s) aus der Gruppe der Radikale ausgewählt ist/sind, welche wenigstens eine Amin-Funktionsgruppe fₐ₁ tragen, welche bevorzugt von/aus einer sterisch platzraubenden Piperidin-Gruppe und deren Derivaten gebildetes/bestehendes Amin ist; und/oder wenigstens eine Epoxy-Funktionsgruppe fₐ₂ und/oder wenigstens eine (Poly)ether-Funktionsgruppe fₐ₃; und/oder wenigstens eine Carboxyl-Funktionsgruppe fₐ₄,
→ und gegebenenfalls eine oder mehrere lineare oder verzweigte (bevorzugt linearer) Alkyl-Gruppen Gₐₗₖ, welche wenigstens 6, bevorzugt wenigstens 8, und noch stärker bevorzugt zwischen 10 und 20 Kohlenstoff-Atome umfasst/umfassen.

2. Verwendung gemäß Anspruch 1, **dadurch gekennzeichnet, dass** das POS A pro Molekül einen oder mehrere untereinander identische oder verschiedene perfluorierte(n) Pfropf(e) Gfh gemäß der Formel 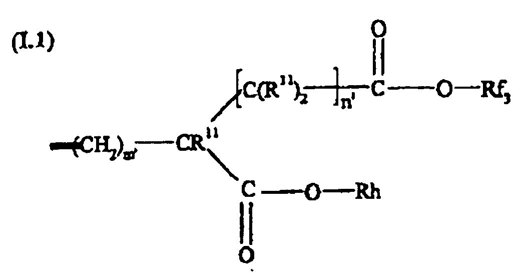 trägt, wobei:
- R¹¹, Rf₃, m', n' den gleichen Definitionen, wie den für R¹, Rf₁, m, n in Anspruch 1 angegebenen, genügen,
- Rh ein lineares oder verzweigtes, bevorzugt lineares, Radikal aus C₆-C₄₀, und stärker bevorzugt aus C₆-C₂₀ ist.

3. Verwendung gemäß Anspruch 1 oder 2, **dadurch gekennzeichnet, dass** das POS A pro Molekül funktionelle Carboxyl-Ankoppel-Radikale fₐ₄ gemäß der folgenden Formel (IV) trägt: 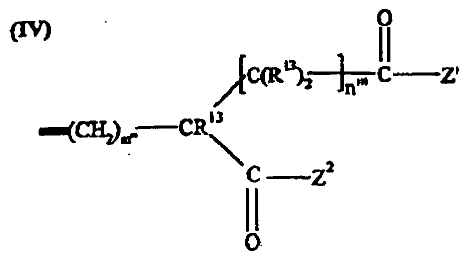 in welcher:
- R¹³, m''', n''' den gleichen Definitionen wie denjenigen, welche oben in der Legende der Formel (I.1) für R¹¹, m' beziehungsweise n' angegeben wurden, genügen;
- Z¹, Z² zu -OH korrespondieren, oder zusammen eine -O- Brücke bilden.

4. Verwendung gemäß einem der Ansprüche 1 bis 3, **dadurch gekennzeichnet, dass** das POS A pro Molekül eine oder mehrere untereinander identische oder verschiedene Gₐₗₖ Gruppen gemäß der Formel (V) trägt: 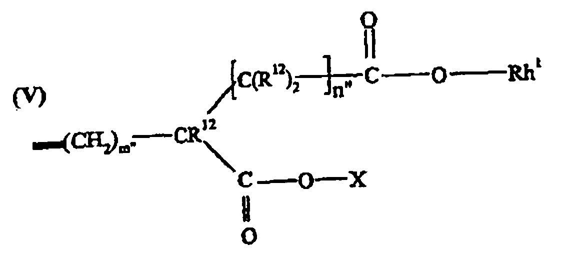 in welcher
- R¹², m'', n'' und Rh₁ den gleichen Definitionen wie denjenigen genügen, welche in Anspruch 2 für R¹¹, m', n' beziehungsweise Rh angegeben wurden,
- X einem Radikal Rh², welches der gleichen Definition wie Rh¹ in Anspruch 2 genügt, oder einem Wasserstoff, oder sogar einem von Rh¹ und von Rh² abweichenden Kohlenwasserstoff-Radikal zugeordnet ist.

5. Verwendung gemäß einem der Ansprüche 1 bis 4, **dadurch gekennzeichnet, dass** die Zusammensetzung ein oder mehrere POS A umfasst, welche der folgenden Formel (VI) genügen: 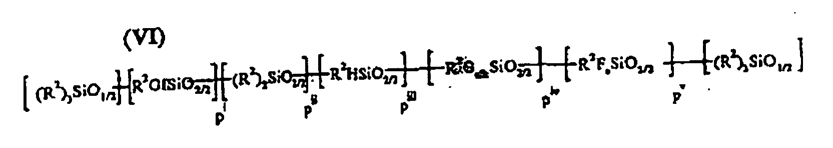 wobei:
• Gf, Fₐ unabhängig voneinander, und jeweils, perfluorierte Pfropfe und Radikale repräsentieren, welche Fa-Funktion(sgrupp)en tragen, wie sie oben definiert sind;
• R² untereinander identische oder verschiedene = Methyl-, Propyl- oder Butyl- sind;
• Gₐₗₖ untereinander identische oder verschiedene = lineare oder verzweigte Alkyle, bevorzugt aus C₆-C₄₀ und stärker bevorzugt aus C₆-C₂₀ sind;
• 0 < pⁱ, bevorzugt 1=pⁱ=100;
• 0 = pⁱⁱ, bevorzugt 0=pⁱⁱ=500;
• 0 = pⁱⁱⁱ, bevorzugt 0=pⁱⁱⁱ=10;
• 0 = p^{iv}, bevorzugt 0=p^{iv}=100;
• 0 < p^{v}, bevorzugt 1=p^{v}=100;
• Σp^{i bis v}+2=5 bis 600, bevorzugt 10 bis 400.

6. Verwendung gemäß einem der Ansprüche 1 bis 5, **dadurch gekennzeichnet, dass** das POS A ferner die Siloxyl-Funktionsgruppen M und D (der) Siloxyl-Funktionsgruppen T und gegebenenfalls Q umfasst.

7. Verwendung gemäß einem der Ansprüche 1 bis 6, **dadurch gekennzeichnet, dass** das POS A ausgehend von POS erhalten wird, welches aus den Polyalkylhydrogensiloxanen ausgewählt ist, wobei die Funktionsgruppen SiH dieses POS anschließend wenigstens teilweise zur Hydrosilylisierung von olefinischen Vorläufern der gesamten/ganzen Pfropfe Gf, Fa und gegebenenfalls Gₐₗₖ, oder einem Teil hiervon, verwendet werden;
in Anwesenheit einer wirksamen Menge von Hydrosilylisierungs-Metall-Katalysator, bevorzugt auf Basis von Platin.

8. Perfluorierte Silikon-Zusammensetzung, welche zum Einsatz bei der Verwendung gemäß einem der Ansprüche 1 bis 7 geeignet ist, **dadurch gekennzeichnet, dass** sie zumindest ein POS A umfasst, welches pro Molekül trägt:
→ ein oder mehrere untereinander identische oder verschiedene perfluorierte Pfropfe Gf gemäß der Formel 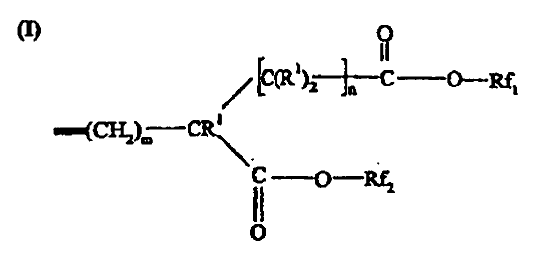 in welcher:
- die Radikale R¹ unabhängig voneinander Wasserstoff oder ein Alkyl aus C₁-C₆ repräsentieren,
- Rf₁ und Rf₂ perhalogierte, bevorzugt perfluorierte - und noch stärker bevorzugt ein lineares oder verzweigtes Perfluoralkyl-Radikal(e) gemäß der Formel 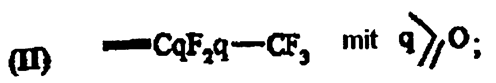 oder 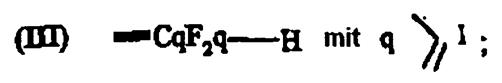
- m=1 bis 10;
- n=0 bis 4;
sind/ist,
→ ein oder mehrere untereinander identische oder verschiedene funktionelle(s) Koppel-Radikal(e) Fa, welche(s) aus der Gruppe der Radikale ausgewählt ist/sind, welche wenigstens eine Amin-Funktionsgruppe fₐ₁ tragen, welche bevorzugt von einer sterisch platzraubenden Piperidinyl-Gruppe und deren Derivaten gebildet wird; und/oder wenigstens eine Epoxy-Funktionsgruppe fₐ₂ und/oder wenigstens eine Polyether-Funktionsgruppe fₐ₃; mit Ausnahme der Carboxyl-Funktionsgruppen fₐ₄;
→ und gegebenenfalls eine oder mehrere lineare oder verzweigte (bevorzugt lineare) Alkyl-Gruppen Gₐₗₖ, welche wenigstens 6, bevorzugt wenigstens 8, und noch stärker bevorzugt zwischen 10 und 20 Kohlenstoff-Atomen umfassen.

9. Perfluorierte Silikon-Zusammensetzung, welche zum Einsatz bei der Verwendung gemäß einem der Ansprüche 1 bis 7 geeignet ist, **dadurch gekennzeichnet, dass** sie wenigstens ein POS A umfasst, welches pro Molekül
→ ein oder mehrere untereinander identische oder verschiedene perfluorierte Pfropfe Gf gemäß der Formel 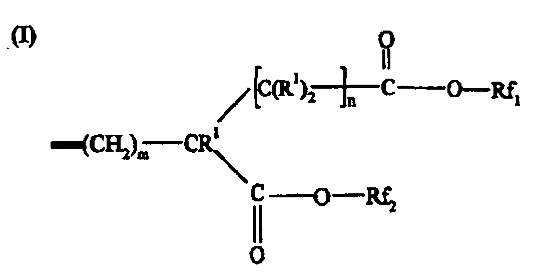 trägt, in welcher:
- die Radikale R¹ unabhängig voneinander Wasserstoff oder ein Alkyl aus C₁-C₆ repräsentieren,
- Rf₁ und Rf₂ perhalogenierte, bevorzugt perfluorierte - und noch stärker bevorzugt ein lineares oder verzweigtes Perfluoralkyl-Radikal(e) gemäß der Formel 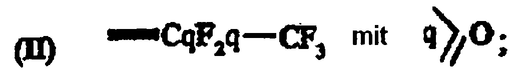 oder 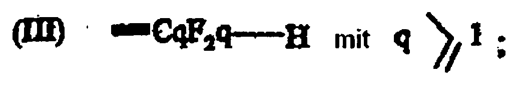 ist/sind, wobei
- die fettgedruckt als 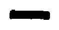 dargestellten freien Valenzen indirekt am Silizium des betrachteten Moleküls angegliedert sind, wobei dieses indirekte Angliedern mithilfe mehrerer Glieder realisiert ist,
- m=1 bis 10 beträgt;
- n=0 oder 4 beträgt;
→ einem oder mehreren untereinander identischen oder verschiedenen funktionellen Koppel-Radikalen Fa, welche aus der Gruppe der Radikale ausgewählt ist/sind, welche wenigstens eine Carboxyl-Funktionsgruppe fₐ₄ tragen,
→ einem oder mehreren Alkyl-Gruppen Gₐₗₖ gemäß der Formel V, wie sie in Anspruch 4 angegeben ist, und wobei X=Rh2 ist.

10. Zusammensetzung gemäß Anspruch 8 oder 9 oder vom Typ der in der Verwendung gemäß einem der Ansprüche 1 bis 7 eingesetzten, **dadurch gekennzeichnet, dass** sie wenigstens ein funktionelles Additiv B und/oder wenigstens einen Katalysator C umfasst, welcher/welche(s) dazu geeignet ist/sind, die Reaktion der Koppel-Gruppen f_{a1 bis 4} mit einem Träger zu fördern, auf welchem diese Zusammensetzung applizierbar ist.

11. Verfahren zum Realisieren von hydrophoben und/oder oleophoben Beschichtungen und/oder Imprägnierungen auf einem Träger, **dadurch gekennzeichnet, dass** es im Wesentlichen besteht aus:
• Präparieren und/oder Einsetzen einer Zusammensetzung des Typs von derjenigen, welche in der Verwendung gemäß einem der Ansprüche 1 bis 7 eingesetzt wird, oder einer Zusammensetzung gemäß einem der Ansprüche 8 bis 10;
• Applizieren dieser Zusammensetzung auf einen Träger, um eine Schicht zu erhalten und/oder ihn zu imprägnieren;
• und im Falle, dass die Zusammensetzung die Form einer Lösung aufweist, gegebenenfalls Verdampfen des Lösungsmittels.

12. Vorläufer von Beschichtungen, Putz(en), Anstrichen, Lack(en), **dadurch gekennzeichnet, dass** sie die Zusammensetzung des Typs der in der Verwendung gemäß einem der Ansprüche 1 bis 7 eingesetzten, oder eine Zusammensetzung gemäß einem der Ansprüche 8 bis 10 umfassen.

## Claims

1. Use of a silicone composition of the type comprising at least one perfluorinated POS **A** and optionally at least one functional additive **B** for the production of hydrophobic and/or oleophobic coverings and/or impregnations of low surface energy, **characterized in that** each molecule of the POS **A** carries:
→ one or more mutually identical or different perfluorinated grafts **Gf** of the formula 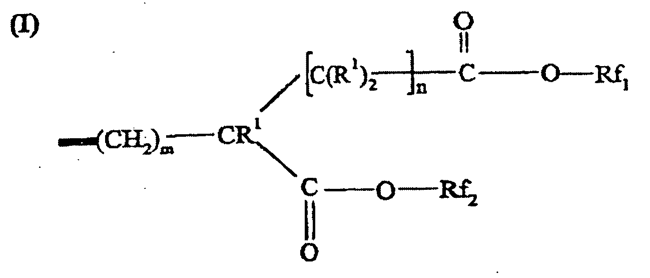 in which:
- the radicals R¹ independently are hydrogen or a C₁-C₆ alkyl;
- Rf₁ and Rf₂ are perhalogenated radicals, preferably perfluorinated radicals and particularly preferably a linear or branched perfluoroalkyl radical of the formula
-CqF₂q-CF₃, where q ≥ 0, **(II)**
or
-CqF₂q-H, where q ≥ 1, **(III)**
the free valences represented in bold, 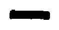 , being indirectly attached to the silicon of the molecule in question, this indirect attachment being effected by way of several links;
- m = 1 to 10; and
- n = 0 or 4;
→ one or more mutually identical or different functional coupling radicals **Fa** selected from the group of radicals carrying at least one amine group **f**_{**a1**}, preferably an amine group consisting of a sterically hindered piperidinyl group and derivatives thereof, and/or at least one epoxy group **f**_{**a2**}**,** and/or at least one (poly)ether group **f**_{**a3**}**,** and/or at least one carboxyl group **f**_{**a4**}**;**
→ and optionally one or more linear or branched (preferably linear) alkyl groups **G**_{**alk**} comprising at least 6, preferably at least 8 and particularly preferably between 10 and 20 carbon atoms.

2. Use according to claim 1, **characterized in that** each molecule of the POS A carries one or more mutually identical or different perfluorinated grafts **Gfh** of formula **(I.1):** 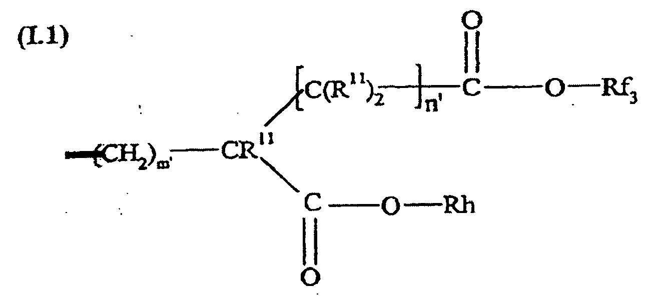 in which:
- R¹¹, Rf₃, m' and n' have the same definitions as those given for R¹, Rf₁, m and n in claim 1; and
- Rh is a linear or branched alkyl radical, preferably a linear C₆-C₄₀ alkyl radical and particularly preferably a linear C₆-C₂₀ alkyl radical.

3. Use according to claim 1 or 2, **characterized in that** each molecule of the POS **A** carries carboxyl coupling radicals **f**_{**a4**} of formula **(IV)** below: 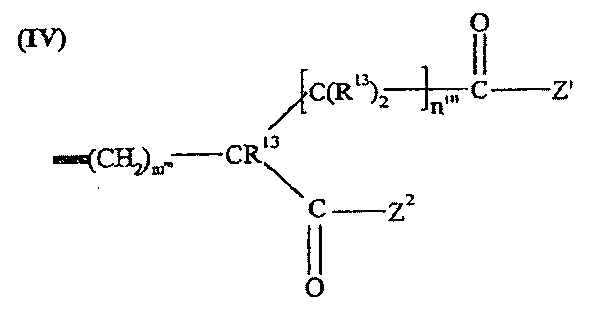 in which:
- R¹³, m''' and n''' have the same definitions as those given respectively for R¹¹, m' and n' in formula **(I.1)** above; and
- Z¹ and Z² are -OH or together form a bridge -O-.

4. Use according to any one of claims 1 to 3, **characterized in that** each molecule of the POS **A** carries one or more mutually identical or different groups **G**_{**alk**} of formula (**V**): 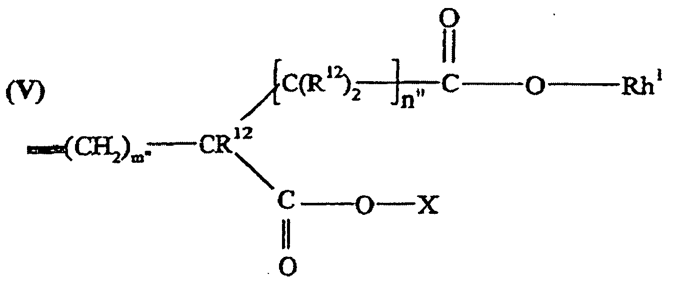 in which:
- R¹², m", n" and Rh¹ have the same definitions as those given respectively for R¹¹, m', n' and Rh in claim 2; and
- X is a radical Rh² defined in the same way as Rh¹ in claim 2, hydrogen or else a hydrocarbon radical other than Rh¹ or Rh².

5. Use according to any one of claims 1 to 4, **characterized in that** the composition comprises one or more POS **A** of formula **(VI)** below: 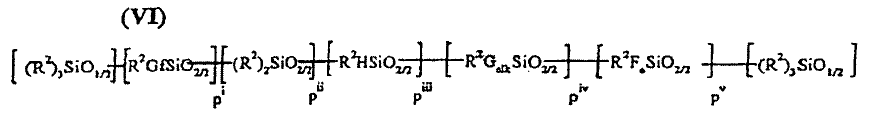 in which:
□ **Gf** and **F**_{**a**} independently are perfluorinated grafts and, respectively, radicals carrying groups **f**_{**a**}, as defined above;
□ R² are mutually identical or different and are methyl, propyl or butyl;
□ **G**_{**alk**} are mutually identical or different and are linear or branched alkyl, preferably C₆-C₄₀ alkyl and particularly preferably C₆-C₂₀ alkyl;
□ 0 < pⁱ , preferably 1 ≤ pⁱ ≤ 100;
□ 0 ≤ pⁱⁱ , preferably 0 ≤ pⁱⁱ ≤ 500;
□ 0 ≤ pⁱⁱⁱ , preferably 0 ≤ pⁱⁱⁱ ≤ 10;
□ 0 ≤ p^{iv} , preferably 0 ≤ p^{iv} ≤ 100;
□ 0 < p^{v} , preferably 1 ≤ p^{v} ≤ 100; and
□ Σp^{i to v} + 2 = 5 to 600, preferably 10 to 400.

6. Use according to any one of claims 1 to 5, **characterized in that**, in addition to the siloxy units M and D, the POS **A** comprises siloxy units T and optionally Q.

7. Use according to any one of claims 1 to 6, **characterized in that** the POS **A** is obtained from POS selected from polyalkylhydrogenosiloxanes, at least some of the SiH units of these POS then being used for the hydrosilylation of olefinic precursors of all or some of the grafts **Gf, Fa** and optionally **G**_{**alk**}, in the presence of an effective amount of a metallic hydrosilylation catalyst preferably based on platinum.

8. Perfluorinated silicone composition capable of being employed in the use according to any one of claims 1 to 7, **characterized in that** it comprises at least one POS **A**, each molecule of which carries:
→ one or more mutually identical or different perfluorinated grafts **Gf** of the formula 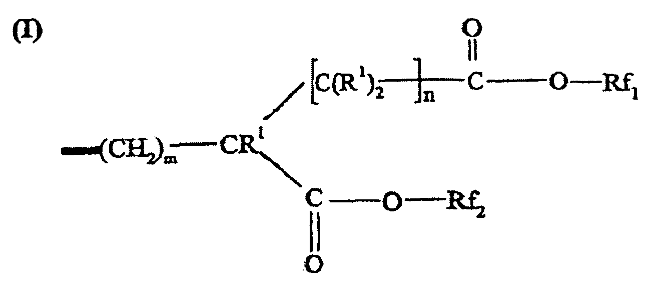 in which:
- the radicals R¹ independently are hydrogen or a C₁-C₆ alkyl;
- Rf₁ and Rf₂ are perhalogenated radicals, preferably perfluorinated radicals and particularly preferably a linear or branched perfluoroalkyl radical of the formula
-CqF₂q-CF₃, where q ≥ 0, **(II)**
or
-CqF₂q-H, where q ≥ 1; **(III)**
- m = 1 to 10; and
- n = 0 or 4;
→ one or more mutually identical or different functional coupling radicals **Fa** selected from the group of radicals carrying at least one amine group **f**_{**a1**}**,** preferably formed of a sterically hindered piperidinyl group and derivatives thereof, and/or at least one epoxy group **f**_{**a2**}**,** and/or at least one polyether group **f**_{**a3**}**,** to the exclusion of carboxyl groups **f**_{**a4**}**;**
→ and optionally one or more linear or branched (preferably linear) alkyl groups **G**_{**alk**} comprising at least 6, preferably at least 8 and particularly preferably between 10 and 20 carbon atoms.

9. Perfluorinated silicone composition capable of being employed in the use according to any one of claims 1 to 7, **characterized in that** it comprises at least one POS **A**, each molecule of which carries:
→ one or more mutually identical or different perfluorinated grafts **Gf** of the formula 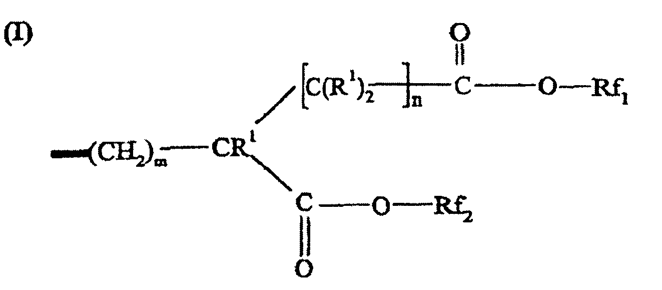 in which:
- the radicals R¹ independently are hydrogen or a C₁-C₆ alkyl;
- Rf₁ and Rf₂ are perhalogenated radicals, preferably perfluorinated radicals and particularly preferably a linear or branched perfluoroalkyl radical of the formula
-CqF₂q-CF₃, where q ≥ 0, **(II)**
or
-CqF₂q-H, where q ≥ 1, **(III)**
the free valences represented in bold, 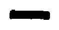 , being indirectly attached to the silicon of the molecule in question, this indirect attachment being effected by way of several links;
- m = 1 to 10; and
- n = 0 or 4;
→ one or more mutually identical or different functional coupling radicals **Fa** selected from the group of radicals carrying at least one carboxyl group **f**_{**a4**}**;**
→ and one or more alkyl groups **G**_{**alk**} of formula **(V),** as given in claim 4, in which X = Rh².

10. Composition according to claim 8 or 9 or of the type employed in the use according to any one of claims 1 to 7, **characterized in that** it comprises at least one functional additive **B** and/or at least one catalyst C capable of favouring the reaction of the coupling groups **f**_{a1 to 4} with a substrate to which said composition can be applied.

11. Process for the production of hydrophobic and/or oleophobic coverings and/or impregnations on a substrate, **characterized in that** it consists essentially in:
► preparing and/or employing a composition of the type employed in the use according to any one of claims 1 to 7 or a composition according to any one of claims 8 to 10;
► applying this composition to a substrate so as to give a film or impregnate it;
► and optionally evaporating the solvent in the case where the composition is in the form of a solution.

12. Precursors of coverings, coatings, paints or varnishes, **characterized in that** they comprise a composition of the type employed in the use according to any one of claims 1 to 7 or a composition according to any one of claims 8 to 10.
